# EUROPEAN PATENT APPLICATION

(11) **EP 3 996 013 A1**
(43) Date of publication of application: **11.05.2022**
(21) Application number: 21212362.4
(22) Date of filing: 24.02.2017
(51) Int. Cl.: G06Q 10/06, A01B 79/00, G06Q 50/02, G06Q 10/04, A01D 91/00

(54) **DEVICES AND METHODS FOR PLANNING AND MONITORING AGRICULTURAL CROP GROWING**

(30) Priority: 04.03.2016 US 201662303677 P; 04.03.2016 US 201662303745 P
(62) Divisional of application: 17710668.9
(71) Applicant: BASF SE, 67056 Ludwigshafen am Rhein (DE)
(72) Inventor: DUQUETTE, Tammy, Research Triangle Park, 27709 (US); SPENCER, Jeffrey Thomas, Bellefonte, 16823 (US); FRANK, Markus, 67117 Limburgerhof (DE); SCHOENEBOOM, Jan, 67056 Ludwigshafen (DE); TARANATHA, Maithry, Research Triangle Park, 27709 (US); RUSSO, Joseph, Bellefonte, 16823 (US); MEYER, Florian, 70190 Stuttgart (DE)
(74) Representative: Maiwald Patent- und Rechtsanwaltsgesellschaft mbH

(57) **Abstract**

A computing device receives data for a plan to grow an agricultural crop. The computer determines an overall sustainability score for sustainability categories by determining an overall level for indicators that indicative of the sustainability category. Benchmark scores are also determined for the sustainability categories by determining benchmark levels corresponding to the indicators. A benchmark level is at least in part a function of the crop, the location of the field in which the crop is planted and the sustainability category. The computer determines a comparison value of the overall sustainability score to the benchmark scores for the sustainability categories. The computer outputs an indicator of whether the comparison value is below a predetermined minimum threshold comparison value and thereby indicates whether a plan for growing the crop meets acceptable sustainability practices.

## Description

### Technical Field

The field of the disclosure relates generally to agricultural planning and monitoring, and more particularly to devices and methods for assisting growers and farm managers in developing and implementing effective crop growing plans, including in some instances crop growing plans that accord with sustainable growing practices.

### Background

Crops such as corn, soybean, canola, sunflowers, and wheat are generally grown in large quantities and may have relatively small profit margins. Accordingly, when planting and growing a crop, growers seek to maximize crop quality, yield, and economic return. During a planting season, crops may be impacted by weather, diseases, and other conditions that positively or negatively affect the crop quality, yield, and economic return. However, it may be difficult for the grower to accurately predict such conditions prior to their occurrence. Further, it may be difficult for the grower to take appropriate action to address the impact of such conditions after they have occurred.

Further, growing demand for agricultural products is increasing strain on our planet. Accordingly, sustainability is becoming an increasingly important consideration in planning and managing crop production. To ensure crops are being sustainably developed, economic, environmental, and social needs must all be balanced. However, it may be difficult for a grower to easily observe and understand the impact that different agricultural practices have on sustainability.

There is a need, therefore, for a system that assists a grower and/or farm manager to tailor a crop growing plan to account for the many variables to be considered in achieving efficient and effective crop growth, and where desired, to further assist the grower and/or farm manager in tailoring such a crop growing plan to include accepted sustainable growing practices.

US 2016/0026940 A1 explains a computer that assists the farmer to generate, update, and execute crop-harvesting plans.

### Summary

In an embodiment, a computer implemented agricultural method generally comprises receiving, at a computing device, at least in part from a user grower, input regarding a field in which a crop is to be grown, a crop to be grown in the field, and a practice associated with said crop. The practice is at least one of: seeding the field in which the crop is to be grown, tilling the field in which the crop is to be grown, irrigating the field in which the crop is to be grown, harvesting the crop following growth thereof and applying at least one product to at least one of the field and the crop planted in the field. Using the computing device, based at least on the field information, the crop information and the practice associated with the crop, a calendar-based time window for completing the practice is determined, with the time window including a most favorable time window for completing the practice and at least one lesser favorable time window for completing the practice. Also using the computing device, based at least on the field information, the crop information and the practice associated with the crop, a yield forecast for the crop is displayed. At the computing device, data regarding at least one of an added practice associated with the crop, a deleted practice associated with the crop, and a change to the practice associated with the crop is received. Using the computing device, based at least on the at least one added practice, deleted practice and change to said practice associated with the crop, an updated calendar-based time window for completing the practice is determined and an updated yield forecast is displayed. An alert indicative of the impact that the at least one added practice, deleted practice and change to the practice associated with the crop has on both the time window for completing the practice and the yield forecast is output to the computing device.

In yet another embodiment, an agricultural device generally comprises a memory device and a processor communicatively coupled to the memory device. The processor is configured to receive, at least in part from a user grower, input regarding a field in which a crop is to be grown, a crop to be grown in the field, and a practice associated with the crop. The practice is at least one of: seeding the field in which the crop is to be grown, tilling the field in which the crop is to be grown, irrigating the field in which the crop is to be grown, harvesting the crop following growth thereof and applying at least one product to at least one of the field and the crop planted in the field. The processor determines, based at least on the field information, the crop information and the practice associated with the crop, a calendar-based time window for completing the practice, with the time window including a most favorable time window for completing the practice and at least one lesser favorable time window for completing the practice. The processor further displays, based at least on the field information, the crop information and the practice associated with the crop, a yield forecast for the crop. The processor receives data regarding at least one of an added practice associated with the crop, a deleted practice associated with the crop, and a change to the practice associated with the crop. Based at least on the at least one added practice, deleted practice and change to the practice associated with the crop, the processor determines an updated calendar-based time window for completing the practice and displays an updated yield forecast. The processor outputs to the computing device an alert indicative of the impact that the at least one added practice, deleted practice and change to the practice associated with the crop has on both the time window for completing the practice and the yield forecast.

In another embodiment, a computer implemented agricultural planning method is provided which generally comprises receiving, at a computing device, data associated with a plan for growing an agricultural crop, with the data being indicative of at least one practice associated with growing an agricultural crop. The at least one practice is at least one of: seeding a field in which the crop is to be grown, tilling the field in which the crop is to be grown, irrigating the field in which the crop is to be grown, harvesting the crop and applying at least one product to at least one of the field and the crop planted in said field. Using the computing device, an overall sustainability score is determined for at least one sustainability category associated with sustainable growing practices. The determining step comprises determining, using the computing device, an overall level for at least one indicator that is indicative of the sustainability category. The indicator level is determined at least in part as a function of the data indicative of the at least one practice associated with growing an agricultural crop. The overall sustainability score for the at least one sustainability category is a function of each determined indicator level.

Using the computing device, a benchmark score is determined for the at least one sustainability category, with the benchmark score being associated with accepted sustainable growing practices. The step of determining the benchmark score comprises determining, using the computing device, a benchmark level corresponding to the at least one indicator that is indicative of the sustainability category. The benchmark level of the at least one indicator is determined at least in part as a function of the crop, the location of the field in which the crop is planted and the sustainability category. The benchmark score for the at least one sustainability category is a function of each determined indicator benchmark level.

Using the computing device, a comparison value of the determined overall sustainability score for the at least one sustainability category to the benchmark score for said at least one sustainability category is determined. An indicator of whether the comparison value is below a predetermined minimum threshold comparison value is output to indicate whether the plan for growing an agricultural crop meets acceptable sustainable growing practices.

In another embodiment, an agricultural planning computing device generally comprises a memory device and at least one processor communicatively coupled to the memory device. The at least one processor is configured to receive data associated with a plan for growing an agricultural crop, with the data being indicative of at least one practice associated with growing an agricultural crop. The at least one practice is at least one of: seeding a field in which the crop is to be grown, tilling the field in which the crop is to be grown, irrigating the field in which the crop is to be grown, harvesting the crop and applying at least one product to at least one of the field and the crop planted in the field. The at least one processor is further configured to determine an overall sustainability score for at least one sustainability category associated with sustainable growing practices. The determination comprises determining an overall level for at least one indicator that is indicative of the sustainability category. The indicator level is determined at least in part as a function of the data indicative of the at least one practice associate with growing an agricultural crop. The overall sustainability score for the at least one sustainability category is a function of each determined indicator level.

The at least one processor is further configured to determine a benchmark score for the at least one sustainability category, with the benchmark score being associated with accepted sustainable growing practices. The at least processer determines the benchmark score by determining a benchmark level corresponding to the at least one indicator that is indicative of the sustainability category. The benchmark level of the at least one indicator is determined at least in part as a function of the crop, the location of the field in which the crop is planted and the sustainability category. The benchmark score for the at least one sustainability category is a function of each determined indicator benchmark level.

The at least one processor further determines a comparison value of the determined overall sustainability score for the at least one sustainability category to the benchmark score for the at least one sustainability category. And indicator of whether the comparison value is below a predetermined minimum threshold comparison value is output by the at least one processor to indicate whether the plan for growing an agricultural crop meets acceptable sustainable growing practices.

In another embodiment, a computer implemented method for sustainable agricultural crop planning generally comprises receiving, at a computing device, at least in part from a user grower, data associated with a plan for growing an agricultural crop. The data is indicative of at least one practice to be performed by the user for growing the agricultural crop, with the at least one practice being at least one of: seeding a field in which the crop is to be grown, tilling the field in which the crop is to be grown, irrigating the field in which the crop is to be grown, harvesting the crop and applying at least one product to at least one of the field and the crop planted in said field.

Using the computing device, a sustainability score is determined at least in part as a function of the data indicative of the at least one practice associated with growing an agricultural crop. A benchmark sustainability score associated with accepted sustainable growing practices is also determined using the computing device. The benchmark sustainability score is determined at least in part as a function of the crop and the geographic location of the field in which the crop is planted. It is then determined, using the computer device, whether the sustainability score is below the benchmark sustainability score.

In the event that the sustainability score is below the benchmark sustainability score, at least one of the following is output to the user grower, using the computing device: a) at least one recommendation for improving the sustainability score relative to the benchmark sustainability score and b) an indicator of at least one factor in the sustainability score being below the benchmark sustainability score.

In another embodiment, an agricultural planning system generally comprises a memory device and at least one processor communicatively coupled to the memory device. The memory device is encoded with instructions that, when executed by the at least one processor, cause the at least one processor to receive at least in part from a user grower, data associated with a plan for growing an agricultural crop, the data being indicative of at least one practice to be performed by the user for growing the agricultural crop. The at least one practice is at least one of: seeding a field in which the crop is to be grown, tilling the field in which the crop is to be grown, irrigating the field in which the crop is to be grown, harvesting the crop and applying at least one product to at least one of the field and the crop planted in the field. The processor determines a sustainability score at least in part as a function of the data indicative of the at least one practice associated with growing an agricultural crop, and also determines a benchmark sustainability score associated with accepted sustainable growing practices. The benchmark sustainability score is determined at least in part as a function of the crop and the geographic location of the field in which the crop is planted. The processor further determines whether the sustainability score is below the benchmark sustainability score. In the event that the sustainability score is below the benchmark sustainability score, the processor outputs to the user grower at least one of a) at least one recommendation for improving the sustainability score relative to the benchmark sustainability score and b) an indicator of at least one factor in the sustainability score being below the benchmark sustainability score.

In another embodiment, a computer implemented agricultural planning method generally comprises receiving, at a computing device, data associated with a plan for growing an agricultural crop, the data being indicative of at least one practice associated with growing an agricultural crop. The at least one practice is at least one of: seeding a field in which the crop is to be grown, tilling the field in which the crop is to be grown, irrigating the field in which the crop is to be grown, harvesting the crop and applying at least one product to at least one of the field and the crop planted in the field. Using the computing device, an overall sustainability score for at least one sustainability category associated with sustainable growing practices is determined by determining, using the computing device, an overall level for at least one indicator that is indicative of the sustainability category, the indicator level being determined at least in part as a function of the data indicative of the at least one practice associated with growing an agricultural crop. The overall sustainability score for the at least one sustainability category is a function of each determined indicator level. Based at least on the field information, the crop information and the practice associated with the crop, a yield forecast for the crop is determined. User input regarding at least one of an added practice associated with the crop, a deleted practice associated with the crop, and a change to the practice associated with the crop is received by the computing device. Based at least on the at least one added practice, deleted practice and change to the practice associated with the crop, an updated overall sustainability score is determined and an updated yield forecast is displayed. An alert is output by the computing device and is indicative of the impact that the at least one added practice, deleted practice and change to the practice associated with the crop has on both the overall sustainability score and the yield forecast.

In yet another embodiment, an agricultural device generally comprises a memory device and a processor communicatively coupled to the memory device. The processor is configured to receive, at least in part from a user grower, data associated with a plan for growing an agricultural crop, the data being indicative of at least one practice associated with growing an agricultural crop. The at least one practice is at least one of: seeding a field in which the crop is to be grown, tilling the field in which the crop is to be grown, irrigating the field in which the crop is to be grown, harvesting the crop and applying at least one product to at least one of the field and the crop planted in the field. The processor determines an overall sustainability score for at least one sustainability category associated with sustainable growing practices by determining an overall level for at least one indicator that is indicative of the sustainability category, with the indicator level being determined at least in part as a function of the data indicative of the at least one practice associated with growing an agricultural crop. The overall sustainability score for the at least one sustainability category is a function of each determined indicator level. The processor further provides, based at least on the field information, the crop information and the practice associated with the crop, a yield forecast for the crop. The processor receives data associated with at least one of an added practice associated with the crop, a deleted practice associated with the crop, and a change to the practice associated with the crop. The processor then determines, based at least on the at least one added practice, deleted practice and change to the practice associated with the crop, an updated overall sustainability score and displays an updated yield forecast. The processor outputs to the computing device an alert indicative of the impact that the at least one added practice, deleted practice and change to the practice associated with the crop has on both the overall sustainability score and the yield forecast.

### Brief Description of the Drawings

Figure 1 is a simplified block diagram of one embodiment of an agricultural analysis computer system.
Figure 2 is an expanded block diagram of a server architecture of the agricultural analysis computer system shown in Figure 1.
Figure 3 illustrates an example configuration of an input information computing device operated by a user.
Figure 4 illustrates an example configuration of a server computing device.
Figures 5 and 6 are an example flow chart of a method for generating a crop plan and a sustainability report.
Figure 7 is a flow chart of an example method for creating a farm.
Figure 8 is a flow chart of an example method for editing a farm.
Figure 9 is a flow chart of an example method for adding a workforce to a farm with an anonymous user invitation option turned off.
Figure 10 is a flow chart of an example method for adding a workforce to a farm with an anonymous user invitation option turned on.
Figure 11 is a flow chart of an example method for creating a field and field data.
Figure 12 is a flow chart of an example method for editing field data.
Figure 13 is a flow chart of an example method for creating a field record card.
Figure 14 is a flow chart of an example method for adding and/or editing a field record card.
Figure 15 is a flow chart of an example method for creating a farm and field association.
Figure 16 is a flow chart of an example method for managing a crop plan scenario.
Figure 17 is a flow chart of an example method for creating, viewing, and editing soil information.
Figure 18 is a flow chart of another example method for creating, viewing, and editing soil information.
Figure 19 is a flow chart of another example method for creating, viewing, and editing soil information.
Figure 20 is a flow chart of an example method for creating and managing a crop plan for an area.
Figure 21 is a flow chart of an example method for creating and managing a crop plan for a farm and field association.
Figure 22 is an example screenshot of a generated crop plan.
Figure 23 is a flow chart of an example method for tailoring a crop plan.
Figure 24 is a flow chart of an example method for managing a crop plan.
Figure 25 is a flow chart of an example method for viewing a crop plan summary.
Figure 26 is a flow chart of an example method for viewing growth stage details.
Figure 27 is a flow chart of an example method for overriding a ground truth growth stage.
Figure 28 is a flow chart of an example method for managing a practice.
Figure 29 is a flow chart of an example method for generating a product list.
Figure 30 is a flow chart of an example method for generating and manipulating list views and map views for an advisor user.
Figure 31 is a flow chart of an example method for generating and manipulating list views and map views for a grower user.
Figure 32 is a flow chart of an example method for managing map views.
Figure 33 is a flow chart of an example method for managing list views.
Figure 34 is a flow chart of an example method for viewing and managing a season plan.
Figure 35 is a flow chart of an example method for generating a crop plan recommendation.
Figure 36 is a flow chart of an example method for performing a compliance check.
Figure 37 is a flow chart of an example method for managing tasks.
Figure 38 is a flow chart of another example method 2100 for managing tasks using computer system 200.
Figure 39 is a flow chart of another example method for managing tasks.
Figure 40 is a flow chart of another example method for managing tasks.
Figure 41 is a flow chart of another example method for managing tasks.
Figure 42 is a flow chart of an example method for using a task list widget.
Figure 43 is a flow chart of an example method for using a field overview widget.
Figure 44 is a flow chart of an example method for using a product usage widget.
Figure 45 is a flow chart of an example method for using a crop distribution widget.
Figure 46 is a flow chart of an example method for generating a sustainability report as part of a sustainability assessment.
Figure 47 is a flow chart of an example method for generating indicator reports.
Figure 48 is an example screenshot of a sustainability report.
Figure 49 is a screenshot of an example eco-toxicity potential indicator report.
Figure 50 is a screenshot of an example nitrogen balance indicator report.
Figure 51 is a flow chart of an example method for displaying indicators when adding/editing a practice of a crop plan.
Figure 52 is a flow chart of an example method for displaying indicators when adding/editing a task for a desired field.
Figure 53 is an example screenshot of an add practice screen.
Figure 54 is a screen shot of a crop plan screen.

### Detailed Description

A computer system for assisting a grower with planning and implementing a crop plan for growing and managing crops is described below in detail. Crop plans generated using the systems and methods described herein assist growers before and/or during a planting season. For example, crop plans may display timing information (e.g., indicating more favorable time periods) for various applications (seeding, tillage, products) as a function of at least i) growth stage cycle for a particular crop type, ii) actual initial planning date, iii) a task/application. This timing information may also be revised mid-season. Crop plans also facilitate determining and displaying different levels of probable timing for presence of pests/diseases as function of i) growth stage, ii) initial planning, iii) the particular pest/disease. Further, crop plans can be used to perform compliance checking for product specifications against a grower plan. Crop plans generated using the systems and methods described herein may be applied as a template to multiple fields. Further, using the embodiments described herein, growth plan information for a crop plan may be converted into specific assigned and dated tasks as a function of i) plan element (e.g., planting, product application), ii) persons assigned to the task, iii) growth stage cycle and initial planting date, and iv) determination of favorable time for completing the task relative to growth stage cycle and initial planning date.

Agricultural sustainability reports generated using the systems and methods described herein assist a grower in planning a planting season for a crop. The sustainability reports also assist the grower in making mid-season adjustments to improve sustainability and productivity. For example, the sustainability reports may be used to assess current practices and products, and identify options for improvement, including revising previously generated crop plans.

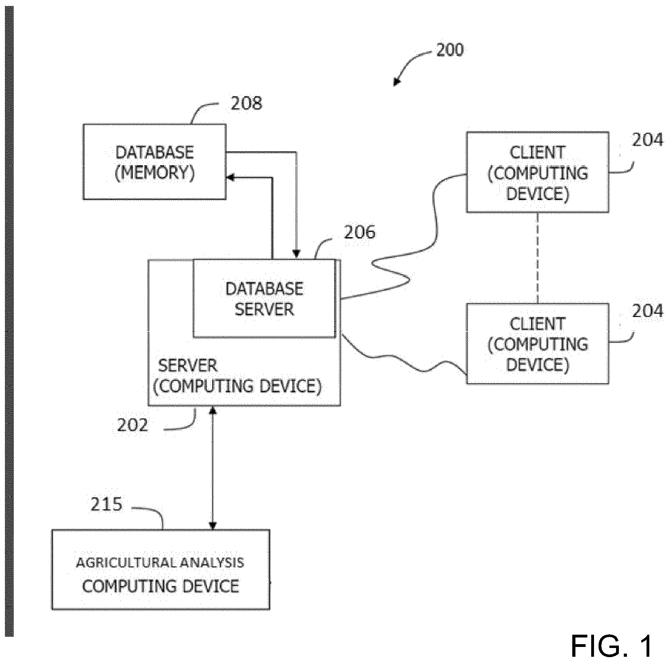

Figure 1 is a simplified block diagram of one embodiment of an agricultural analysis computer system 200 that includes an agricultural analysis computing device 215 in communication with a server system 202 that includes a database server 206. Further, a database 208 is in communication with server system 202. Agricultural analysis computing device 215 includes a processing device and a memory. Computer system 200 further includes a plurality of client subsystems, also referred to as client systems 204 or client computing devices, connected to server system 202. In one embodiment, client systems 204 are computers including a web browser, such that server system 202 is accessible to client systems 204 using the Internet or another network. Client systems 204 are interconnected to the Internet or another network through many interfaces including a network, such as a local area network (LAN) and/or a wide area network (WAN), dial-in connections, cable modems, wireless-connections, and special high-speed ISDN lines. Client systems 204 may be any device capable of interconnecting to the Internet including a web-based phone, personal digital assistant (PDA), watch, medical device, kiosk, laptop computer, desktop computer, netbook, tablet, phablet, or other web-connectable equipment.

Database server 206 is connected to database 208 containing information on a variety of matters, as described below in greater detail. In one embodiment, database 208 is stored on server system 202 and may be accessed by potential users at one of client systems 204 by logging onto server system 202 through one of client systems 204. Database 208 is also accessible to agricultural analysis computing device 215. In an alternative embodiment, database 208 is stored remotely from server system 202 and may be non-centralized (e.g., in a cloud computing configuration). Server system 202 could be any type of computing device configured to perform the steps described herein. Additionally, agricultural analysis computing device 215 is in communication with server system 202. In some implementations, agricultural analysis computing device 215 is incorporated into or integrated within server system 202.

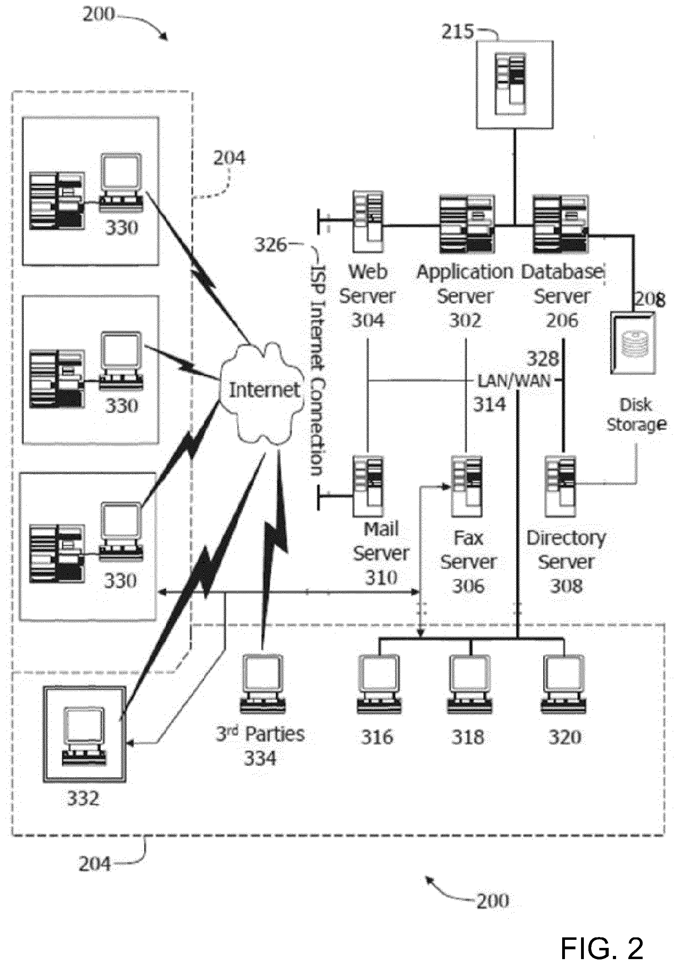

Figure 2 is an expanded block diagram of a server architecture of agricultural analysis computer system 200 in accordance with one embodiment. Computer system 200 includes client systems 204 and agricultural analysis computing device 215. Server system 202 includes database server 206, an application server 302, a web server 304, a fax server 306, a directory server 308, and a mail server 310. Database 208 (e.g., a disk storage unit), is coupled to database server 206 and directory server 308. Servers 206, 302, 304, 306, 308, and 310 are coupled in a local area network (LAN) 314. In addition, a system administrator's workstation 316, a user workstation 318, and a supervisor's workstation 320 are coupled to LAN 314. Alternatively, workstations 316, 318, and 320 are coupled to LAN 314 using an Internet link or are connected through an Intranet.

Each workstation, 316, 318, and 320, is a personal computer having a web browser. Although the functions performed at the workstations typically are illustrated as being performed at respective workstations 316, 318, and 320, such functions can be performed at one of many personal computers coupled to LAN 314. Workstations 316, 318, and 320 are illustrated as being associated with separate functions only to facilitate an understanding of the different types of functions that can be performed by individuals having access to LAN 314.

Server system 202 is configured to be communicatively coupled to various entities, including third parties 334 using an Internet connection 326. Server system 202 is also communicatively coupled to agricultural analysis computing device 215. In some embodiments, agricultural analysis computing device 215 is integrated within server system 202. The communication in the example embodiment is illustrated as being performed using the Internet, however, any other wide area network (WAN) type communication can be utilized in other embodiments, i.e., the systems and processes are not limited to being practiced using the Internet. In addition, and rather than WAN 328, local area network 314 could be used in place of WAN 328.

In the example embodiment, any authorized individual or entity having a workstation 330 may access system 200. At least one of the client systems includes a manager workstation 332 located at a remote location. Workstations 330 and 332 include personal computers having a web browser. Also, workstations 330 and 332 are configured to communicate with server system 202. Furthermore, fax server 306 communicates with remotely located client systems, including a client system 332, using a telephone link. Fax server 306 is configured to communicate with other client systems 316, 318, and 320 as well.

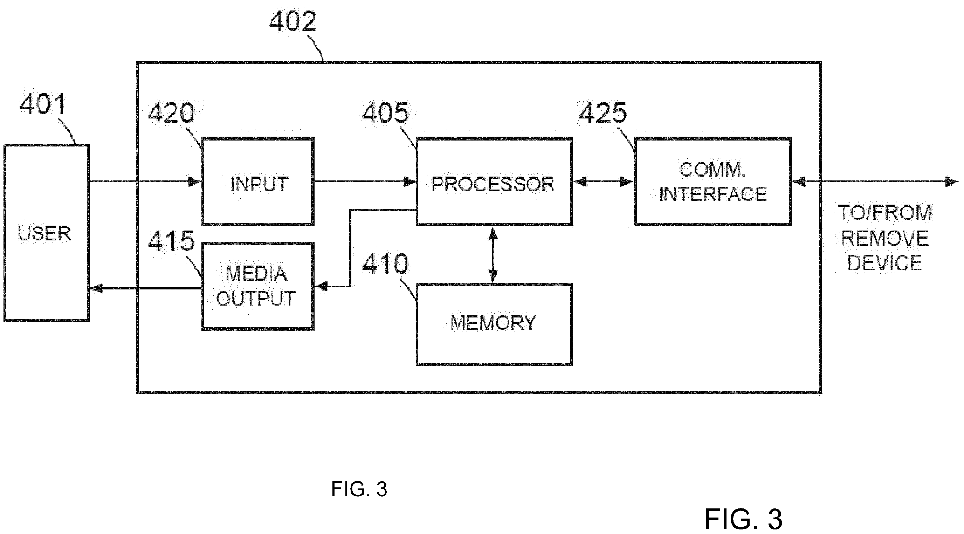

Figure 3 illustrates an example configuration of an input information computing device 402 operated by a user 401. Input information computing device 402 enables user 401 to provide input information, as described in detail herein. Input information computing device 402 may include, but is not limited to, client systems ("client computing devices") 204, 316, 318, and 320, workstation 330, and manager workstation 332 (shown in Figure 2).

Input information computing device 402 includes one or more processors 405 for executing instructions. In some embodiments, executable instructions are stored one or more memory devices 410. Processor 405 may include one or more processing units (e.g., in a multi-core configuration). One or more memory devices 410 are any one or more devices allowing information such as executable instructions and/or other data to be stored and retrieved. One or more memory devices 410 may include one or more computer-readable media.

Input information computing device 402 also includes at least one media output component 415 for presenting information to user 401. Media output component 415 is any component capable of conveying information to user 401. In some embodiments, media output component 415 includes an output adapter such as a video adapter and/or an audio adapter. An output adapter is operatively coupled to processor 405 and operatively couplable to an output device such as a display device (e.g., a liquid crystal display (LCD), organic light emitting diode (OLED) display, cathode ray tube (CRT), or "electronic ink" display) or an audio output device (e.g., a speaker or headphones).

In some embodiments, input information computing device 402 includes an input device 420 for receiving input from user 401. Input device 420 may include, for example, a keyboard, a pointing device, a mouse, a stylus, a touch sensitive panel (e.g., a touch pad or a touch screen), a gyroscope, an accelerometer, a position detector, or an audio input device. A single component such as a touch screen may function as both an output device of media output component 415 and input device 420.

Input information computing device 402 may also include a communication interface 425, which is communicatively connectable to a remote device such as server system 202. Communication interface 425 may include, for example, a wired or wireless network adapter or a wireless data transceiver for use with a mobile phone network (e.g., Global System for Mobile communications (GSM), 3G, 4G or Bluetooth) or other mobile data network (e.g., Worldwide Interoperability for Microwave Access (WIMAX)).

Stored in one or more memory devices 410 are, for example, computer-readable instructions for providing a user interface to user 401 via media output component 415 and, optionally, receiving and processing input from input device 420. A user interface may include, among other possibilities, a web browser and client application. Web browsers enable users, such as user 401, to display and interact with media and other information typically embedded on a web page or a website from server system 202. A client application allows user 401 to interact with a server application from server system 202 or a web server.

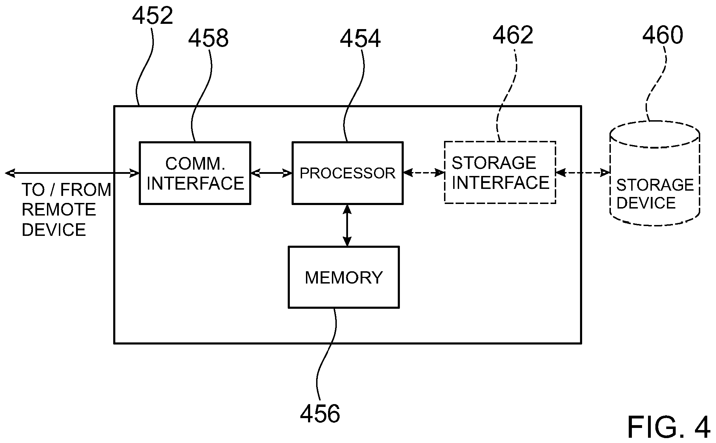

Figure 4 illustrates an example configuration of a server computing device 452 such as server system 202 (shown in Figures 1 and 2). Server computing device 452 may include, but is not limited to, database server 206, application server 302, web server 304, fax server 306, directory server 308, and mail server 310. Server computing device 452 is also representative of agricultural analysis computing device 215.

Server computing device 452 includes one or more processors 454 for executing instructions. Instructions may be stored in one or more memory devices 456, for example. One or more processors 454 may include one or more processing units (e.g., in a multi-core configuration).

One or more processors 454 are operatively coupled to a communication interface 458 such that server computing device 452 is capable of communicating with a remote device such as data source computing device 402 or another server computing device 452. For example, communication interface 458 may receive requests from client systems 204 via the Internet or another network, as illustrated in Figures 1 and 2.

One or more processors 454 may also be operatively coupled to one or more storage devices 460. One or more storage devices 460 are any computer-operated hardware suitable for storing and/or retrieving data. In some embodiments, one or more storage devices 460 are integrated in server computing device 452. For example, server computing device 452 may include one or more hard disk drives as one or more storage devices 460. In other embodiments, one or more storage devices 460 are external to server computing device 452 and may be accessed by a plurality of server computing devices 452. For example, one or more storage devices 460 may include multiple storage units such as hard disks or solid state disks in a redundant array of inexpensive disks (RAID) configuration. One or more storage devices 460 may include a storage area network (SAN) and/or a network attached storage (NAS) system. In some embodiments, one or more storage devices 460 may include database 208.

In some embodiments, one or more processors 454 are operatively coupled to one or more storage devices 460 via a storage interface 462. Storage interface 462 is any component capable of providing one or more processors 454 with access to one or more storage devices 460. Storage interface 462 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing one or more processors 454 with access to one or more storage devices 460.

One or more memory devices 410 and 456 may include, but are not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are example only, and are thus not limiting as to the types of memory usable for storage of a computer program.

Using computer system 200, the user may generate, view, and manage a crop plan, as described herein. The crop plan may developed, for example, to maximize expected crop yield and/or sell price of the produce. Using data from the crop plan, the computer system 200 may also be used to generate a sustainability report for purpose of modifying the crop plan to further optimize good sustainability practices.

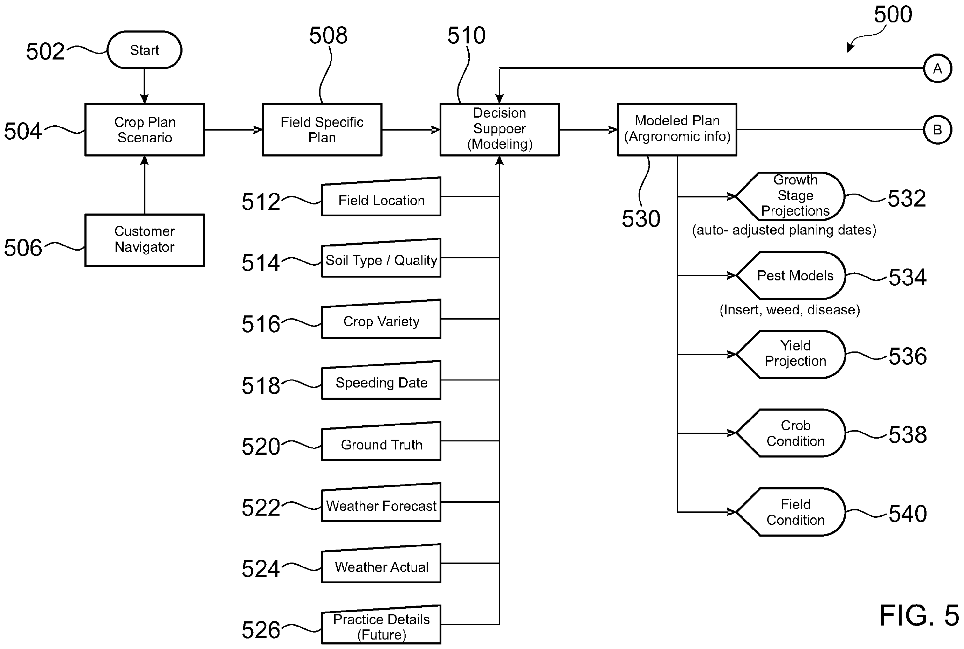

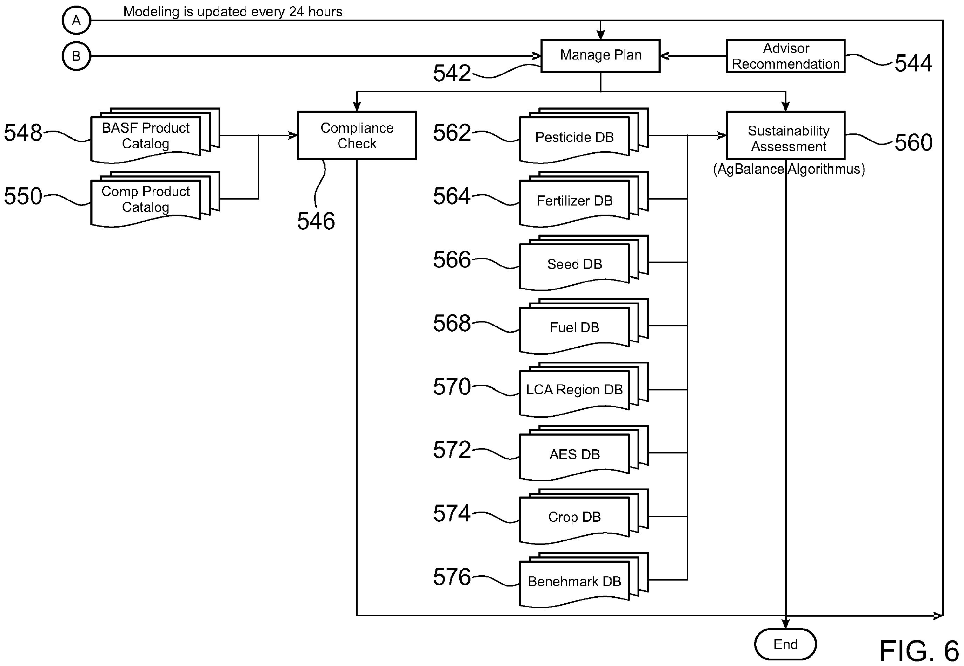

Figures 5 and 6 combined illustrate one example of a method 500 for generating a crop plan and optional sustainability assessment, as described in further detail herein. Method 500 may be implemented, for example, using computer system 200. Method 500 begins at block 502. At block 504, a crop plan scenario is generated. The crop plan scenario may be generated based on input from a customer navigator at block 506. As used herein, a crop plan scenario is a set of practices and product recommendations for the crops that the grower has planned for the season. The term "recommendation" as used herein, refers to any suggestion, tip, advice or like provided to the user. A recommendation may require some form of assent by the user in order to be implemented, such as user input to the computing system, or a recommendation may be automatically implemented by the computing system.

At block 508, the crop plan scenario is used to generate a field specific plan, and the field specific plan is provided to a decision support system (e.g., a modeling system) at block 510. Other inputs to the decision support system may include field location data 512, soil type/quality data 514, crop variety data 516, seeding date data 518, ground truth data 520, weather forecast data 522, actual weather data 524, and future practices details data 526. These inputs are described in detail below.

Based on the various inputs, the decision support system 510 generates a modeled plan, or crop plan, that includes various agronomic information at block 530. For example, the modeled plan may include growth stage projections 532, pest models 534, a yield projection 536, a crop condition 538, and a field condition 540. At block 542, the crop plan is managed by the user. For example, the crop plan may be managed based on an advisor recommendation generated at block 544. Managing the crop plan and advisor recommendations are described in detail below.

In this embodiment, managing the crop plan may include editing one or more practices to modify the type or amount of a product to be applied to the crop. At block 546, a compliance check may be performed to compare the one or more product applications defined in the crop plan to a set of compliance standards (e.g., as defined by a product label). The compliance standards may be retrieved, for example, from a provider product catalog 548 and/or a compliance product catalog 550. If the compliance check determines the product applications in the crop plan are compliant (i.e., within the compliance standards), method 500 ends at block 551. If the compliance check determines that the intended product applications in the crop plan are not compliant, appropriate warnings are generated and the user further manages the crop plan at block 542 in an attempt to make the product applications compliant (e.g., by modifying the product applications defined in the crop plan and re-performing the compliance check). The results of the compliance check may also be provided to the decision support system at block 510.

As shown in Figure 6, the user may also generate a sustainability assessment based on the managed crop plan at block 560. The sustainability assessment 560 may receive inputs from, for example, a pesticide database 562, a fertilizer database 564, a seed database 566, a fuel database 568, and LCA (lifecycle assessment) region database 570, an AES (agri-environmental scheme) database 572, a crop database 574, and a benchmark database 576. The generation and reporting of the sustainability assessment as well as the manner of using the sustainability assessment to further modify the crop plan is described in detail below.

In this embodiment, as described below, the sustainability assessment includes a plurality of indicators that identify the sustainability of the crop plan. If one or more of the indicators represent poor sustainability, the user can further manage the crop plan at block 542 in an attempt to improve the sustainability (e.g., by modifying aspects of the crop plan and generating an updated sustainability report). In contrast, if the sustainability of the crop plan is desirable, method 500 ends at block 551.

Accordingly, method 500 may be used to generate and manage a crop plan, and to run compliance checks and generate sustainability reports for the crop plan. Methods associated with generating the crop plan, managing the crop plan, running compliance checks, and generating sustainability reports will be described herein. Unless otherwise indicated, all of these methods may be implemented using computer system 200.

Using computer system 200, a user can create, view, and edit a farm. For example, the user may create a farm when creating a field specific plan (i.e., block 508 in Figure 5). Once a farm is created, a unique ID is associated with the created farm, and that unique ID is associated with a user ID for the user that created the farm.

View and edit actions for different parameters of the farm depend upon the access provided to the user based on his/her role (e.g., grower, farm manager, farm worker, advisor, etc.). To create a farm, the user provides a farm location (e.g., a farm address), a total farm size, and a farm code. The user may also provide information on the farm workforce and operations. The user may also provide information on biodiversity, good agricultural practices, and crop rotation information associated with the farm.

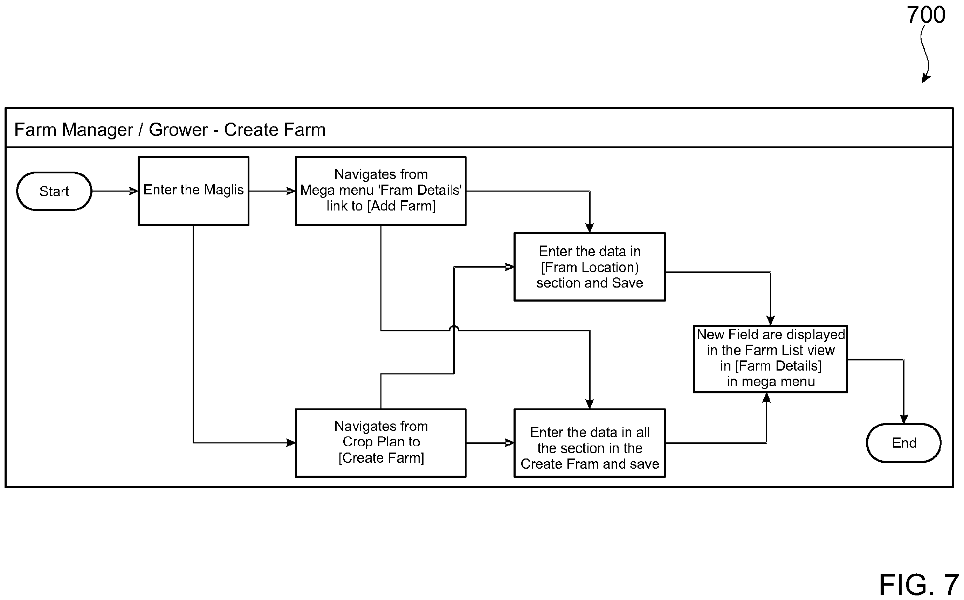

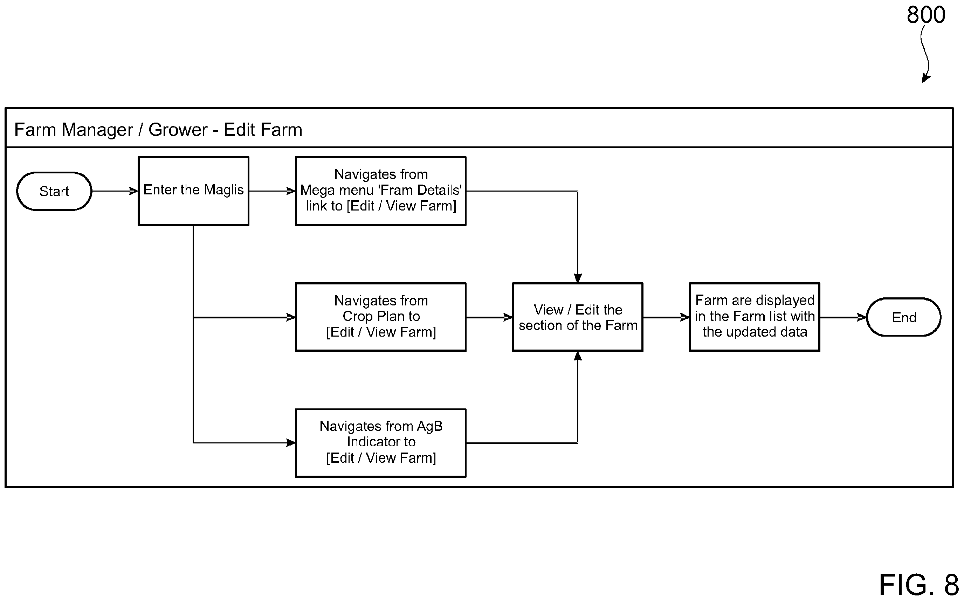

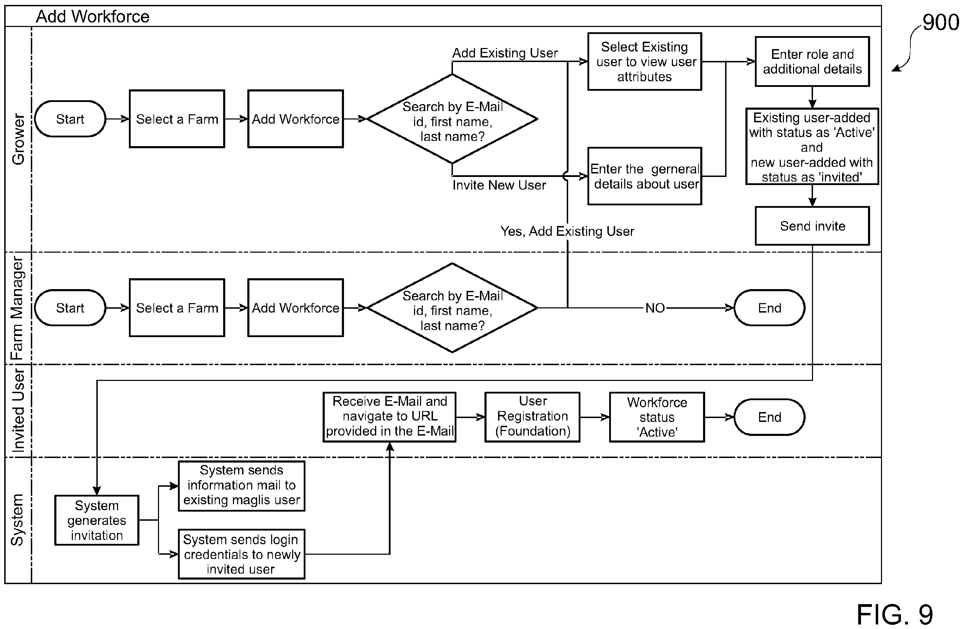

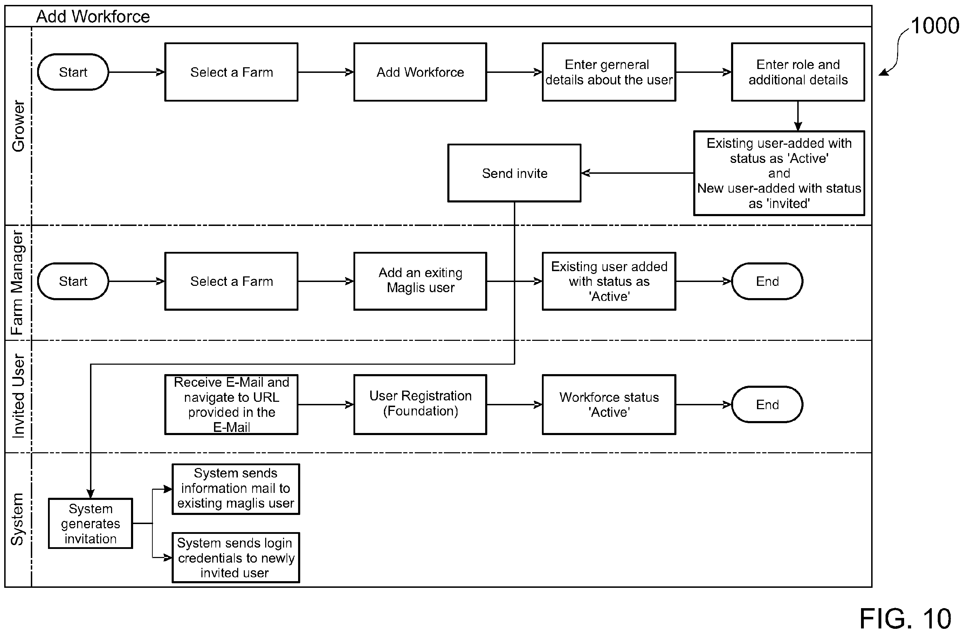

Figure 7 is a flow chart of an example method 700 for creating a farm using computer system 200. The first action after the start symbol, which is referred to as "Enter the Maglis" in this and some of the following figures, is to enter (or to log on to) the system "Maglis" which stands for the computer system 200. Figure 8 is a flow chart of an example method 800 for editing a farm using computer system 200. Figure 9 is a flow chart of an example method 900 for adding a workforce to a farm using computer system 200 with an anonymous user invitation option turned off. Figure 10 is a flow chart of an example method 1000 for adding a workforce to a farm using computer system 200 with an anonymous user invitation option turned on. When the anonymous user invitation option is turned on, the user may only add another user based on already known information (as opposed to conducting a search of other known users).

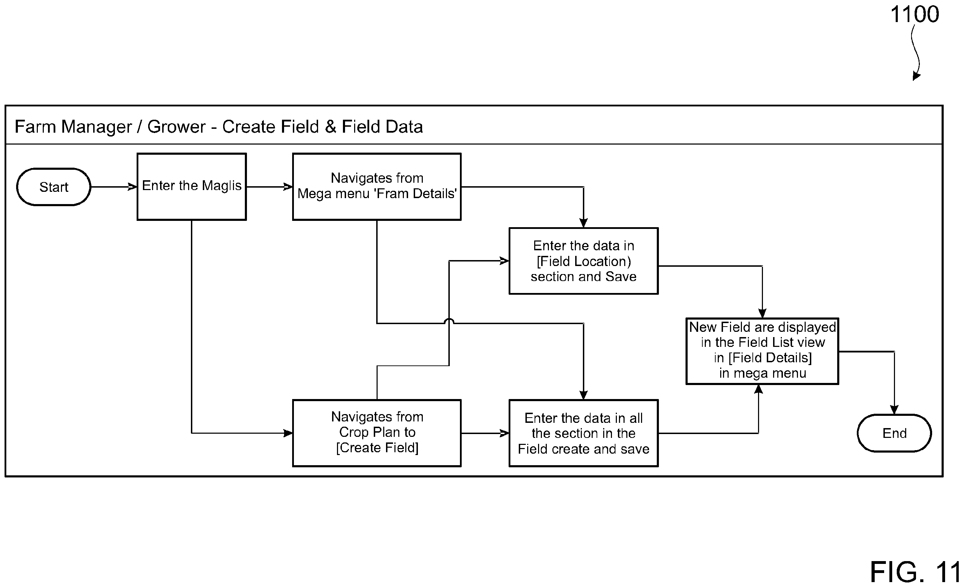

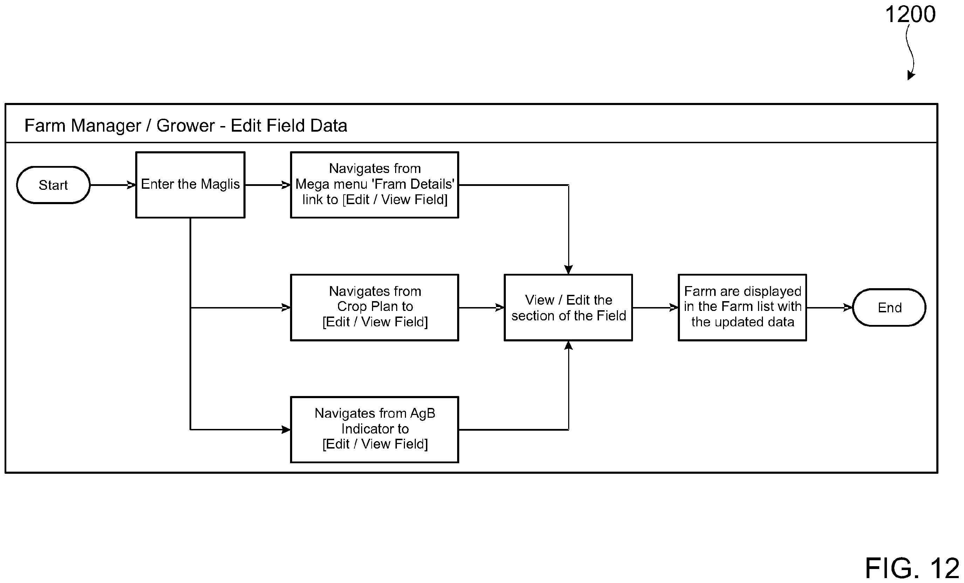

A user can create, edit, and view one or more fields for a farm using computer system 200. For example, the user may create a field when creating a field specific plan (i.e., block 508 in Figure 5). Specifically, the user can define and edit the field's location, cost and non-crop related income details, erosion practices, management summary, and crop nutrient history. Figure 11 is a flow chart of an example method 1100 for creating a field and field data using computer system 200. Figure 12 is a flow chart of an example method 1200 for editing field data using computer system 200. The user may draw boundaries of the field, for example, using a drawing tool of computer system 200.

Computer system 200 also enables a user to create, edit, and view a field record card for fields in a farm. Field record cards, as used herein, are a record of conditions in a field for a planting season. The field record card may include, for example, field name, farm name, grower name, task type, and task name. Task type may include, for example, tillage, seeding, crop protection product, fertilizer, irrigation, or harvesting. Tasks are described in more detail below. Field record cards from previous years may be used to generate a crop plan scenario and/or a field specific plan (i.e., blocks 504 and 508 in Figure 5).

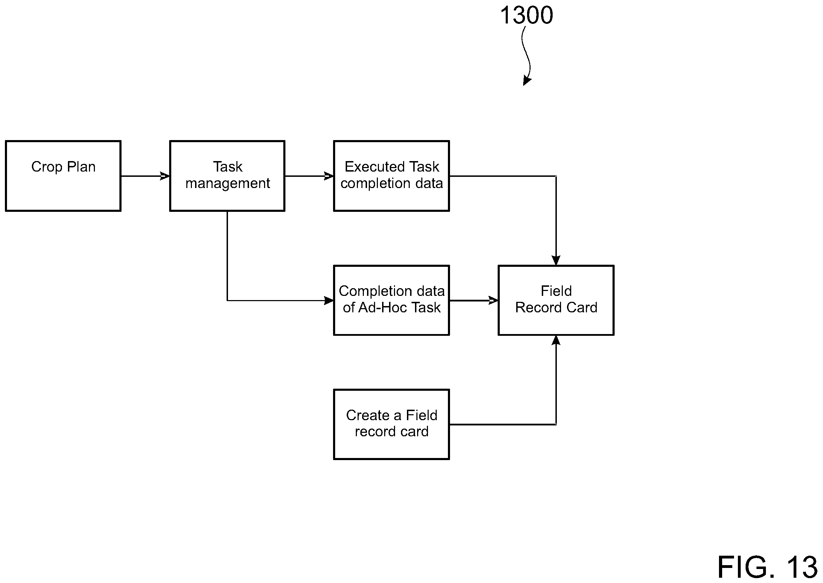

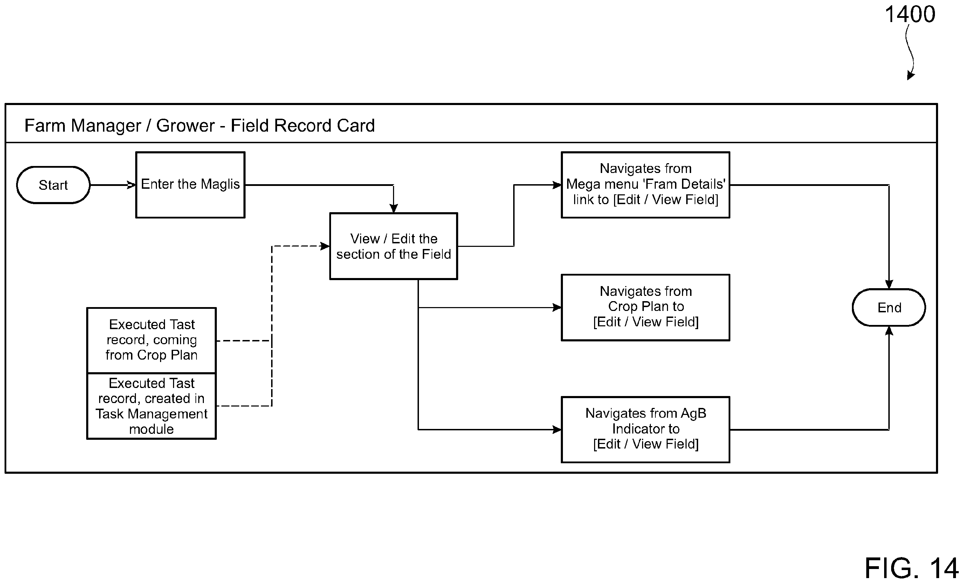

Figure 13 is a flow chart of an example method 1300 for creating a field record card. As shown in Figure 13, the field record card may be created from task management of a previous crop plan (either from executed task completion data or from ad-hoc task completion data), or may be created directly (i.e., unrelated to a crop plan). Figure 14 is a flow chart of an example method 1400 for adding and/or editing a field record card.

Once one or more farms and fields are created, as described above, computer system 200 enables a user to define a farm and field association (also referred to as a farm enterprise), to associate crop plan scenarios, crop plans, practices, and recommendations with the farm and field association. A farm and field association is a logical entity formed by grouping together multiple farms and fields while executing functionalities that can be performed in bulk. Notably, the farm and field association is not a physical entity, and any logical association formed will be carried forward logically when creating crop plans, managing practices, publishing recommendations, and converting practices to tasks. However, the user can modify the logical association at any point in time and remove a field or multiple fields from the logical association. The farm and field association provides flexibility to the grower to perform crop plan functionalities in bulk to all desired fields at once.

A user may define a farm and field association by selecting one or more farms, and selecting one or more fields associated with the selected farms. The user may define the association while performing bulk operations (e.g., creating and applying crop plans, managing practices, managing recommendations, converting practices to tasks, performing task management).

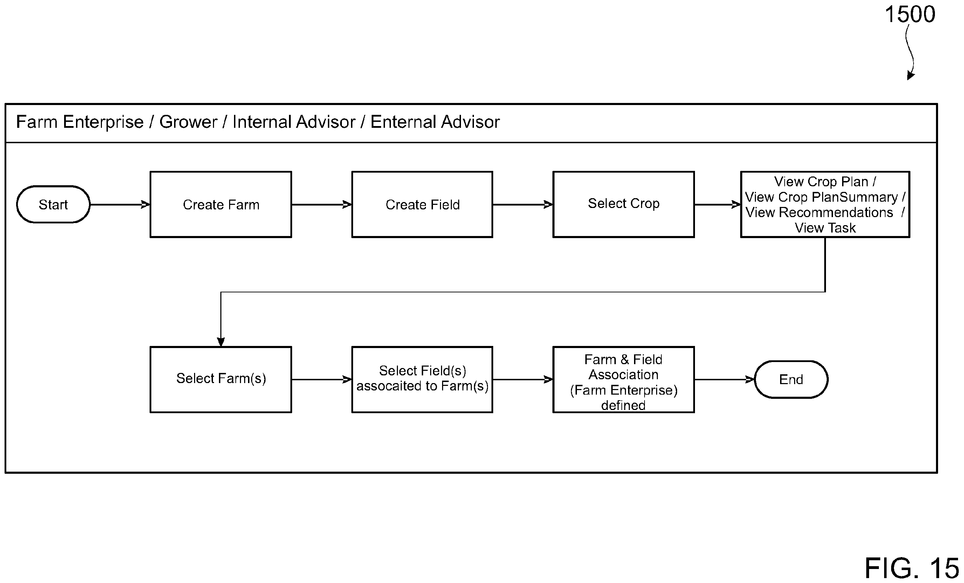

Once the farm and field association is defined, a grower user can apply a crop plan of a crop to the farm and field association. Through this action, the crop plan is applied to all the farms and fields in the farm and field association at once. The grower user may also update the crop plan practices and apply the changes to the farm and field association, causing the practices to update for all the farms and fields in the farm and field association at once. Using computer system 200, the grower user can also update crop plan practices and convert the practices to tasks for all the farms and fields in the farm and field association at once. Further, an advisor user can update crop plan practices and publish them as recommendations for all the farms and fields in the farm and field association at once. Advisory recommendations are described in detail below Figure 15 is a flow chart of an example method 1500 for creating a farm and field association using computer system 200.

As discussed above, a crop plan scenario is created at block 504 (shown in Figure 5). Accordingly, computer system 200 enables a user to create and view a crop plan scenario. Specifically, using computer system 200, an advisor user can create a crop plan for a specific grower. Further, a grower user can create a crop plan for his or her crop. For an advisor user, the process of defining a scenario may involve a face to face discussion with the grower to educate the grower on aspects related to agronomy and technical aspects of products so that an effective scenario plan may be generated for the grower. For example, the advisor user may generate the crop plan using a customer navigator (block 506) used by the advisor to gather and record information from the grower and/or farm manager relating to the fields and crops managed by the grower and/or manager.

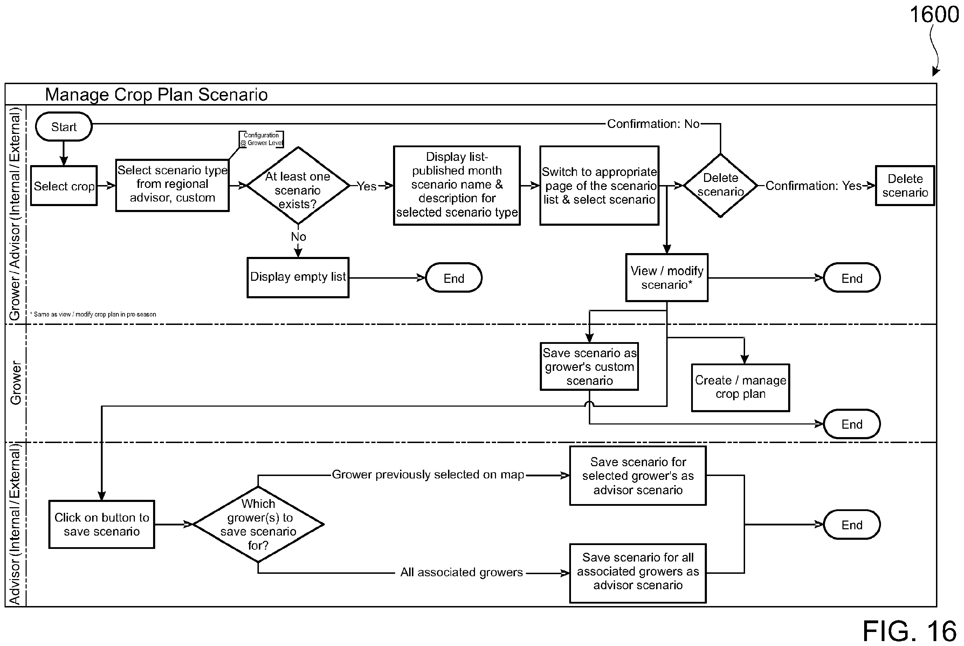

In this embodiment, there are three different types of scenarios available to a grower: i) regional scenarios, ii) advisor scenarios, and iii) custom scenarios. Regional scenarios are created and stored for a grower based on a combination of the crop, country, and region in which the field is located. These regional scenarios are available to all growers depending on the region to which the grower is associated within a country. Advisor scenarios are created by advisor users based on discussions with the grower and based on knowledge of the advisor user about the grower's crop cultivation history. Accordingly, the advisor scenarios are customized and suited to the grower's crop cultivation requirements. Custom scenarios are created and/or saved by the grower themselves. The grower can select a regional or advisor scenario and use it as-is without making changes. Alternatively, the grower can modify practice specific details to an existing regional/advisor scenario. In either case, the grower saves the scenario with a unique scenario name. Figure 16 is a flow chart of an example method 1600 for managing a crop plan scenario using computer system 200.

As described above, in method 500 (shown in Figures 5 and 6), a decision support system receives a plurality of inputs at block 510, including, e.g., soil type/quality data 514, to generate a crop plan. Accordingly, a user may create, view, and edit soil information at a field level using computer system 200. Soil information may include, for example, soil properties, nutrient information, information on trace elements and heavy metals, etc. Regardless of whether the user has more than one sample of soil information, the user can add one set of soil data for each field. The user may decide whether average values should be considered, whether the most recent values should be considered, or whether the most relevant values should be considered. Soil information may be collected from a lab or an equivalent source.

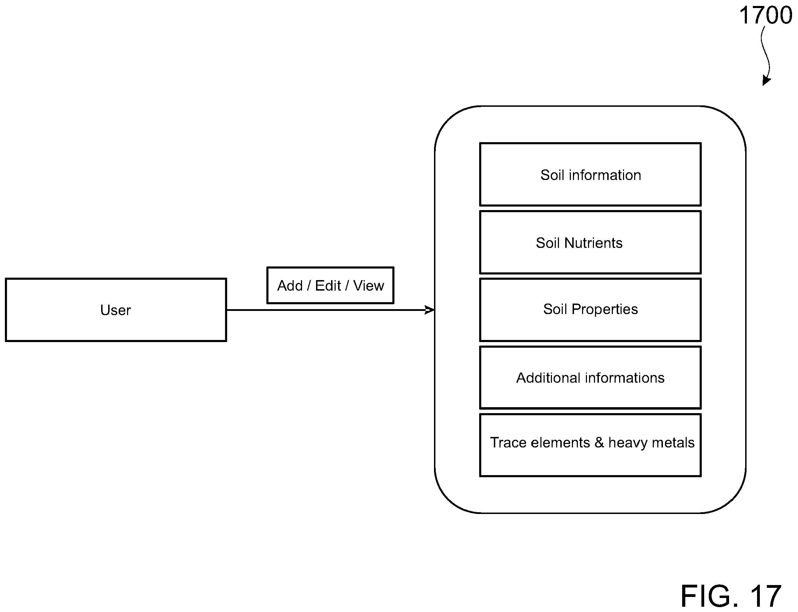

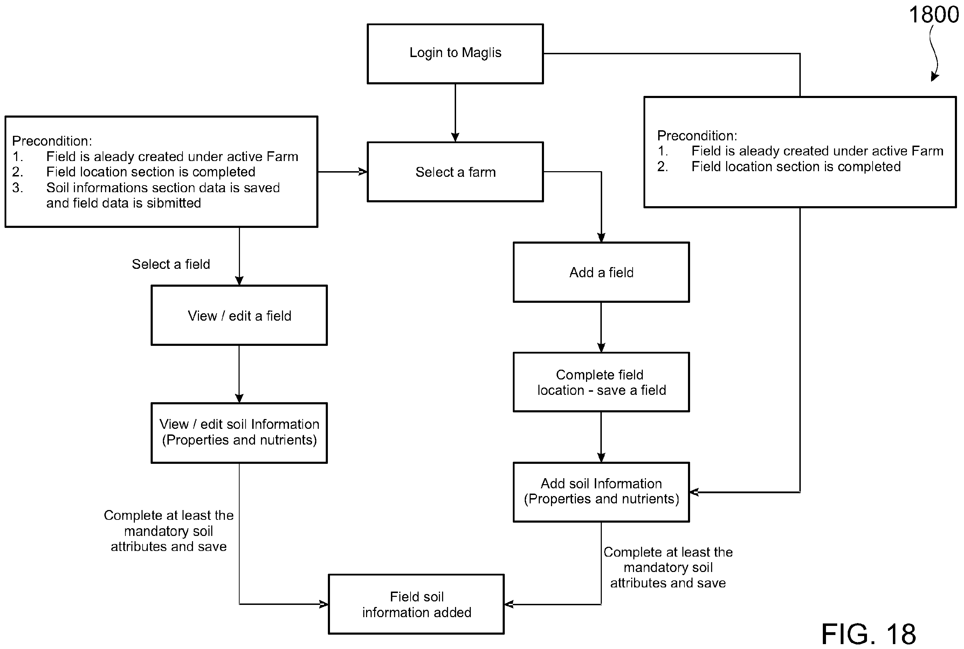

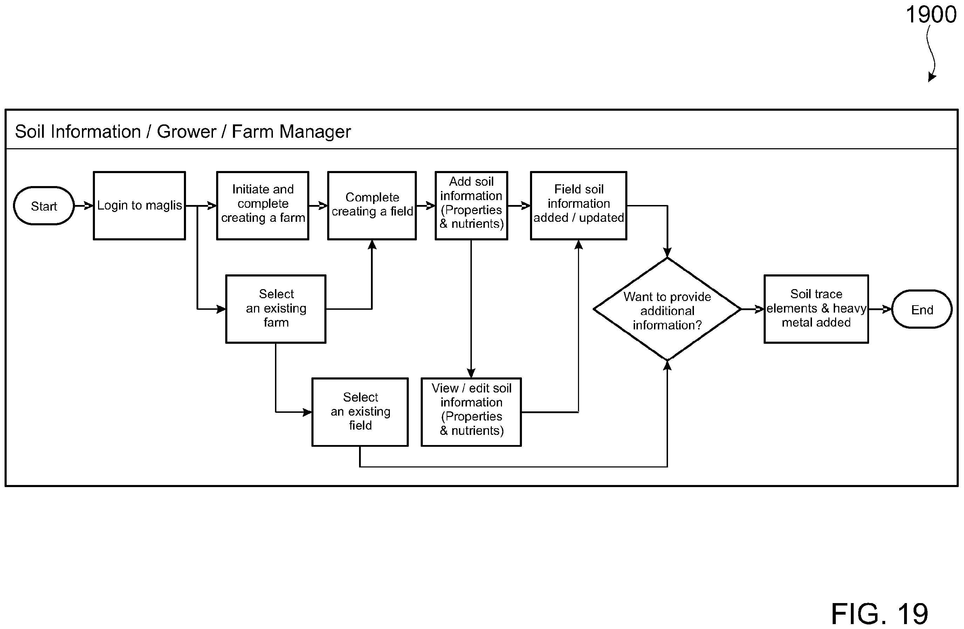

Figure 17 is a flow chart of an example method 1700 for creating, viewing, and editing soil information. Figure 18 is a flow chart of another example method 1800 for creating, viewing, and editing soil information. Figure 19 is a flow chart of another example method 1900 for creating, viewing, and editing soil information.

Once a crop plan is generated (i.e., at block 530 (shown in Figure 5)), computer system 200 allows a user to apply a selected crop plan scenario to a crop in a particular area. Once the crop plan scenario is applied, product information details associated with the crop plan scenario may be viewed by the user. An area is a geographic area that is independent of a farm or field area, but may be included in a farm or field area. The option of applying a crop plan directly to an area allows applying a crop plan without requiring the grower to set up farm and field details. That is, the grower can choose a crop, provide crop plan parameters, and apply a crop plan scenario directly to an area. After applying the crop plan, the grower can continue to manage the crop plan by adding and editing practices as required to cultivate the crop for the current season.

After applying the crop plan scenario to an area, the user may view the crop plan details applied to the area. Key static growth stages of the crop being managed are displayed in the crop plan detail along with the relevant practices. In this embodiment, the practices are not associated with calendar dates, but are associated with growth stages. That is, the growth stages are not aligned with calendar dates, and the recommended start and end times of practices are associated with growth stages. As noted above, the user can add and edit practices, and manage the crop plan for the area.

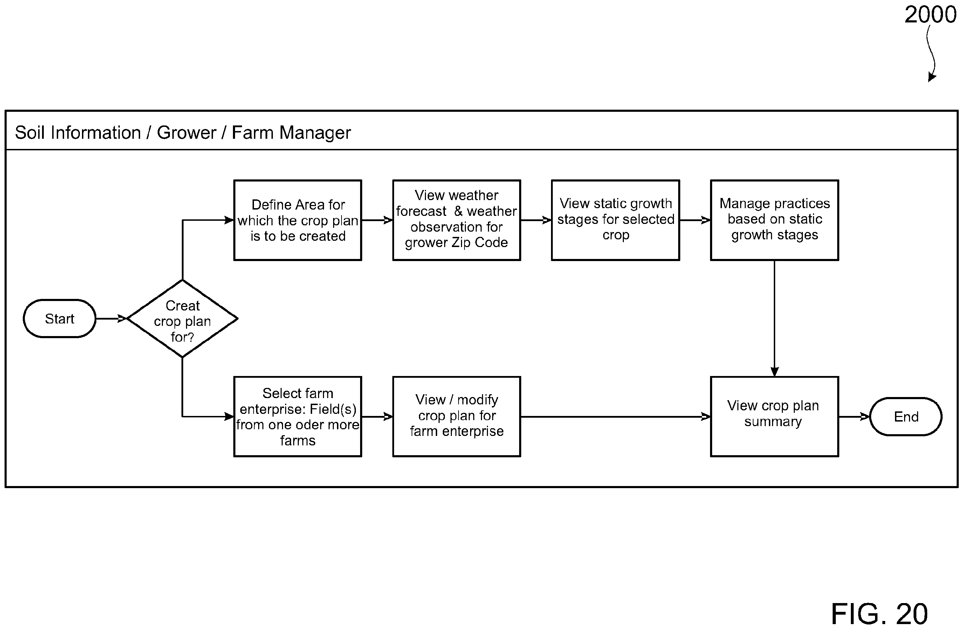

The user can also view field (i.e., production) information after applying a crop plan scenario to an area. The field information includes all details entered by the user for his or her crop. Computer system 200 also allows the user to navigate to weather observation, growth stage detail, and compliance check summary screens. Figure 20 is a flow chart of an example method 2000 for creating and managing a crop plan for an area using computer system 200.

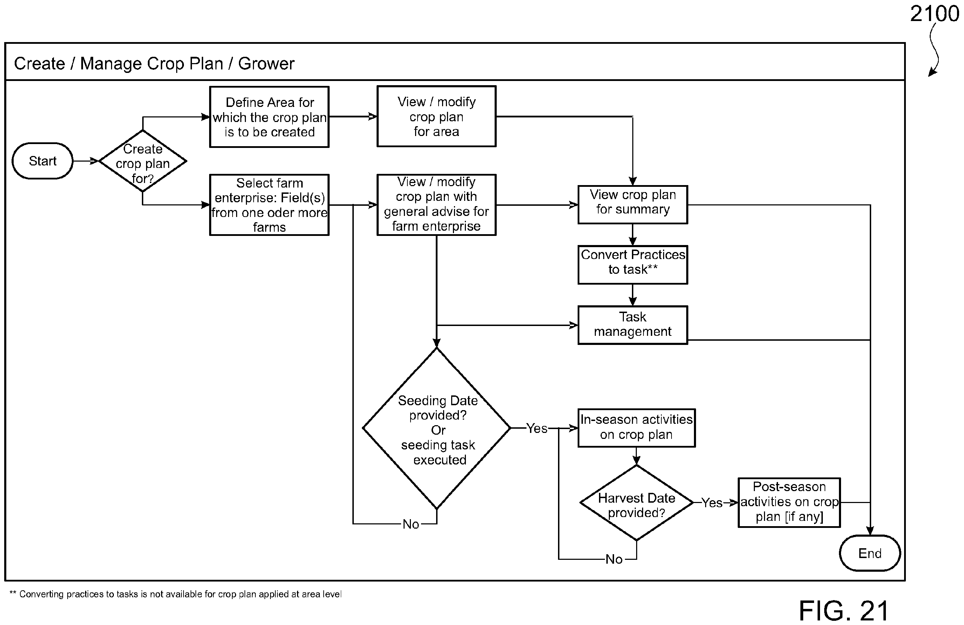

The user can also create and manage a crop plan for a farm and field association (also referred to as a farm enterprise) using computer system 200. Farm and field associations are described above. Figure 21 is a flow chart of an example method 2100 for creating and managing a crop plan for a farm and field association using computer system 200.

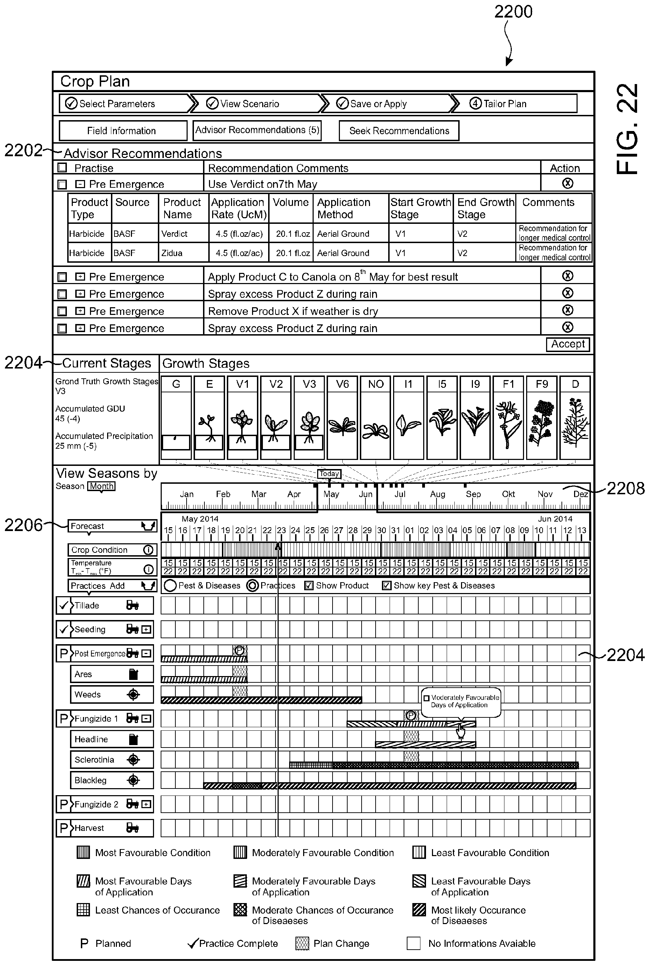

Figure 22 is an example screenshot 2200 of a crop plan generated using computer system 200 (i.e., at block 530 (shown in Figure 5)). Screenshot 2200 includes a field/recommendation section 2202, a growth stage section 2204 including a diagram showing growth stages of the crop associated with the crop plan, and a calendar section 2206. Calendar section 2206 has timing indicators that indicate most, moderately, and least favorable conditions, most, moderately, and least favorable days of application, and most, moderately, and least likely days of diseases, as described in detail herein.

Decision support may be used to generate and manage the crop plan, as described herein. For example, the crop plan may be created pre-season and tailored in-season. The crop plan allows the user to view growth stages and growing practices over the entire season. Further, when the user edits practice details, computer system 200 facilitates ensuring those changes are compliant with predefined label compliances (i.e., during a compliance check at block 546 (shown in Figure 6)). Based on the crop plan, the grower can be updated on the effect of weather and other agronomy indicators daily.

The crop plan assists a grower in planning his or her growing season, and recommends best suited products and practices for his or her field and crop. For example, the grower may take one or more real-world actions with respect to their field and crop based on data observed in one or more of field/recommendation section 2202, growth stage section 2204, and calendar section 2206. Accordingly, a tailored crop plan allows the grower to create a complete season plan that may be used to plan tasks for the current season and track those tasks to completion. In the example embodiment, a crop plan is created for a specific field and crop.

Regarding the crop plan, computer system 200 allows the user to define crop parameters for the current season. Further, the user can select an appropriate crop scenario (described above) so as to have the correct platform to create the crop plan. As part of the crop plan, the user can view growth stage timelines for the crop, enabling the user to have accurate and up to date information regarding weather, precipitation, and growing degree units (GDUs). The user can add and/or edit practices for the crop plan, and products associated with the crop plan may be checked for compliance. Further, computer system 200 facilitates generating and providing advisor recommendations to the user regarding the crop plan, as described below.

A tailored crop plan refers to a crop plan that has been tailored or modified for the field and crop in a season, taking into account accurate and real-time parameters (e.g., weather, moisture, etc.). A crop plan created by an advisor or the grower may be saved as a scenario for future use. In this embodiment, only layout information is saved, and field/crop specific information is not retained. This template may be used by the grower for future seasons.

Regarding recommendations, the advisor may make suggestions and/or changes to the grower's existing crop plan for the field and crop. These suggestions/changes are provided to the grower as "Advisor Recommendations". The recommendations may be, for example, suggesting that the grower add a new practice to the existing crop plan, or make minor changes to a product application in a practice. The grower has the option to either accept or reject the recommendations.

For example, in screenshot 2200, field/recommendation section 2202 displays five advisor recommendations. Each recommendation includes a practice and comments associated with the recommendation. A practice refers to a specific method used to facilitate farming. Practices may or may not include application of products. For example a seeding practice may include treating seeds with fungicides and sowing them by hand or with a seed drill. Another practice may include spraying pesticides to protect crops.

When a grower user selects a particular practice, products associated with that practice and information regarding those products is displayed. For example, as shown in Figure 22, the user has selected a "Pre Emergence" practice, which causes information on two herbicide products ("Verdict" and "Zidua") to be displayed. The information may include an application rate, volume, application method, start growth stage (i.e., the growth stage where the product should start being applied), end growth stage (i.e., the growth stage where the product should stop being applied), and comments regarding the product.

To display different information in field/recommendation section 2202, the user selects tabs other than an "Advisor Recommendations" tab. For example, selecting a "Field Information" tab causes field information (e.g., field name, location, etc.) to be displayed, and selecting a "Seek Recommendation" tab enables a first user (e.g., a grower user) to request a recommendation from a second user (e.g., an advisor user).

Products may be, for example, pesticides or fertilizer. Pesticides (also referred to as crop protection products) are chemicals that generally protect plants from damaging influences such as weeds (herbicides), diseases (fungicides), and insects (insecticides). Fertilizers are organic or inorganic materials added to soil to supply one or more plant nutrients to facilitate plant growth. The nutrients may include primary nutrients (N, P, K), secondary nutrients (Ca, Mg, S), and micronutrients (Fe, Mn, Cu, Zn, CI, Mo, B, Se, Si, CI, Ni, Na). Standard fertilizers are available through a fertilizer catalog. Further, using a setup fertilizer functionality of computer system 200, the user may use a custom fertilizer blend.

As noted above, the crop plan also displays growth stage information in a growth stage section 2204. The growth stage information includes defined periods or cycles of a plant's growth, such as seedling, tillering, and reproductive stages. The length of each stage is influenced by temperature, moisture, light (e.g., day length), nutrition, and variety. For example, the growth and development of corn is continuous, but can be divided into easily recognizable growth stages. Key growth stages may be labeled as vegetative or reproductive stages.

GDUs are a measure of heat accumulation and may be used to predict plant development rates, such as the date that a flower will bloom, the date a crop will reach maturity, etc. Plant development depends on temperature, and plants require a specific amount of heat to develop from one stage in the life cycle to another. Using calendar days for predicting plant development may not be completely accurate, as research shows that measuring heat accumulated over time provides a more accurate physiological estimate than counting calendar days. Growing degree days (GDD) is a technique of assigning a heat value to each day. The heat values are added together to calculate an estimate of the amount of seasonal growth the plants have achieved.

In regards to weather, atmospheric variables that impact crops include solar radiation, air temperature, humidity, and precipitation. Day-to-day variations of the variables across the landscape may be referred to as weather. Weather changes at critical stages of a crop's development cycle may have a strong influence on the productivity and yields of the crop. Long-term average temperature and humidity, and total solar radiation and precipitation over a crop's growing season may be referred to as climate.

Calendar section 2206 includes timing indicators that indicate most, moderately, and least favorable conditions, most, moderately, and least favorable days of application, and most, moderately, and least likely days of diseases for the crop plan. Specifically, calendar section 2206 displays a grid 2207 that includes color-coded timing indicators associated with practices over a period of time. In screenshot 2200 the displayed period of time is from approximately May 15 to June 13, 2014. By manipulating a calendar display bar 2208, the user can change which period of time is displayed in grid 2207. A vertical line through grid 2207 indicates the current day.

As shown in Figure 22, in this embodiment, calendar section 2206 includes temperature information (e.g., minimum temperature, maximum temperature, average temperature) for each day. Further, calendar section 2206 includes a list of practices on a left-hand side of grid 2207. Practices may be identified as complete (e.g., by displaying a checkmark) or as planned (e.g., by displaying a "P") to enable the user to quickly ascertain which practices have and have not been completed.

For a given practice, the practice name (e.g., "Post Emergence"), the product(s) associated with the practice (e.g., "Ares"), and any associated pests/diseases (e.g., "Weeds") may be displayed. For the practice name and products, grid 2207 may include color-coded identifiers indicating most, moderately, and least favorable conditions, as well as most, moderately, and least favorable days of application of the products. For pests/diseases, grid 2207 may include color-coded identifiers indicating most, moderately, and least likely days of pests/diseases.

For example, in Figure 22, for the "Post Emergence" practice, the most favorable days for applying Ares are May 15 through May 20, 2014. Further, weeds are most likely to occur May 15 through May 28, 2014.

The color-coded timing indicators in grid 2207 for various practices and products are determined as a function of at least i) growth stage cycle for a particular crop type, ii) actual initial planning date, iii) a task/application. The color-coded timing indicators in grid 2207 for presence of pests/diseases are determined as a function of at least i) growth stage, ii) initial planning, iii) the particular pest/disease.

Notably, when a user creates or manages one or more practices for the crop plan, the data displayed in calendar section 2206 is also updated. Accordingly, the user can change one or more practices and directly observe the impact of those changes in calendar section 2206. This allows the user to tailor the crop plan (either prior to or in season) to take advantage of favorable conditions and to avoid pests/diseases. Further, during the planting season, the user can view the information in calendar section 2206 and take a corresponding real-world action (e.g., applying a product, harvesting, etc.) in response to viewing that information. Accordingly, the crop plan assists a grower in both planning and successfully executing a planting season.

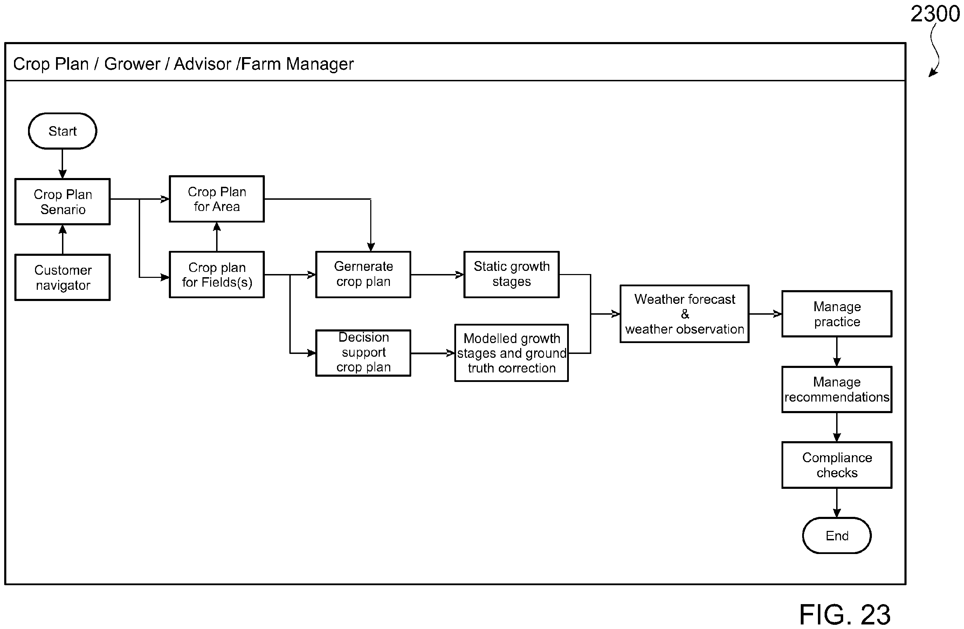

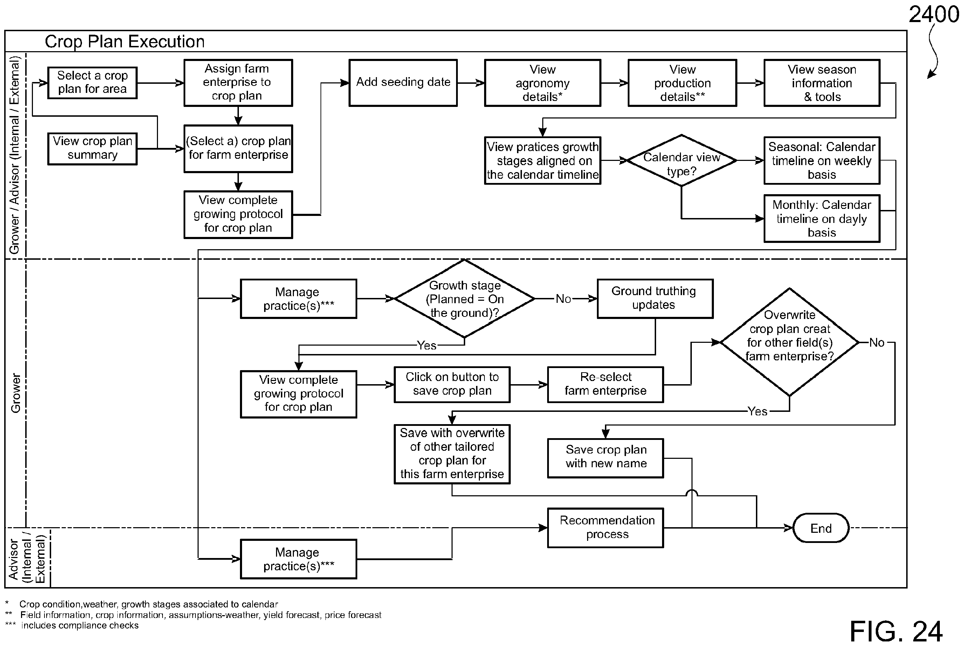

Figure 23 is a flow chart of an example method 2300 for tailoring a crop plan using computer system 200. Figure 24 is a flow chart of an example method 2400 for executing a crop plan using computer system 200.

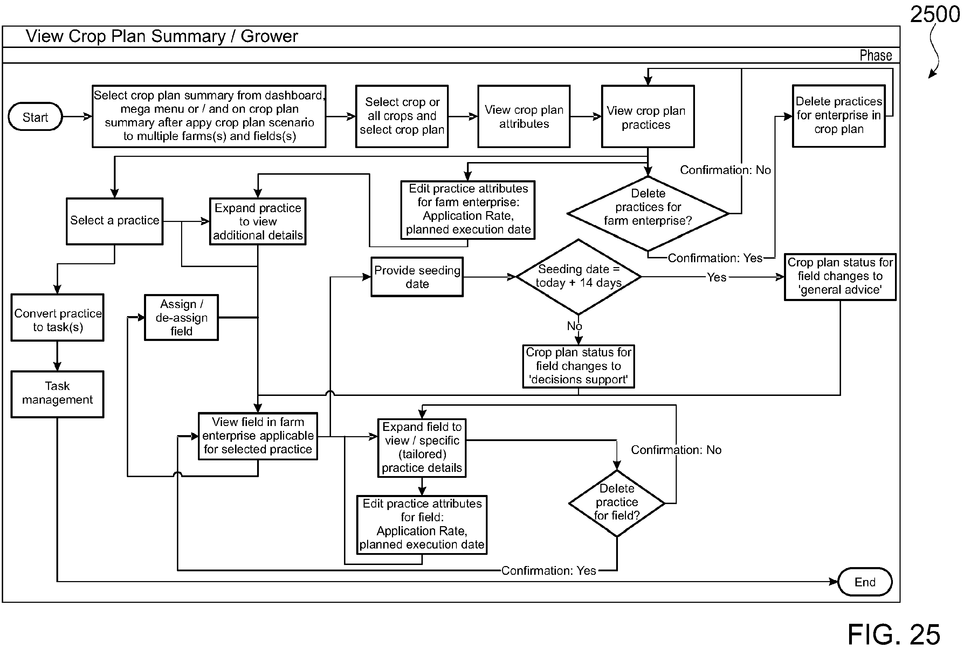

Once crop plans are generated, users may use computer system 200 to view various agronomic information within the crop plans, as well as the crop plans themselves. For example, using computer system 200, a user can select a crop to view all crop plans associated with a particular crop across a farm enterprise. When a user selects a crop, all crop plans associated with that crop are displayed. A crop may have different crop plans (e.g., a crop plan for yield potential, a crop plan for ROI, etc.). Further, each crop plan may apply to different fields and/or areas. Computer system 200 also converts the practices planned in the crop plans into a task, either for an individual field, or in bulk across all fields. A summarized viewing window is displayed to the grower, which allows the grower to view all crop plans for a crop, and view all associated practices. Further, the viewing window allows the grower user to perform edit and delete operations on practices, either in bulk for all fields in the area, or at an individual field level. An advisor user can use the same functionality to view crop plans, edit practices, and edit crop plans in bulk or at an individual field level. Figure 25 is a flow chart of an example method 2500 for viewing a crop plan summary using computer system 200.

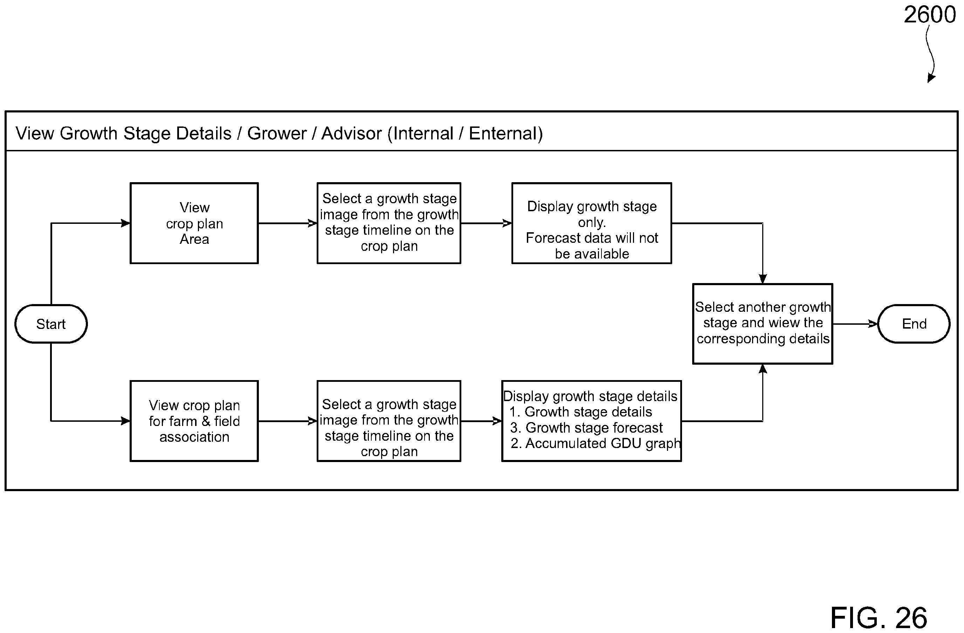

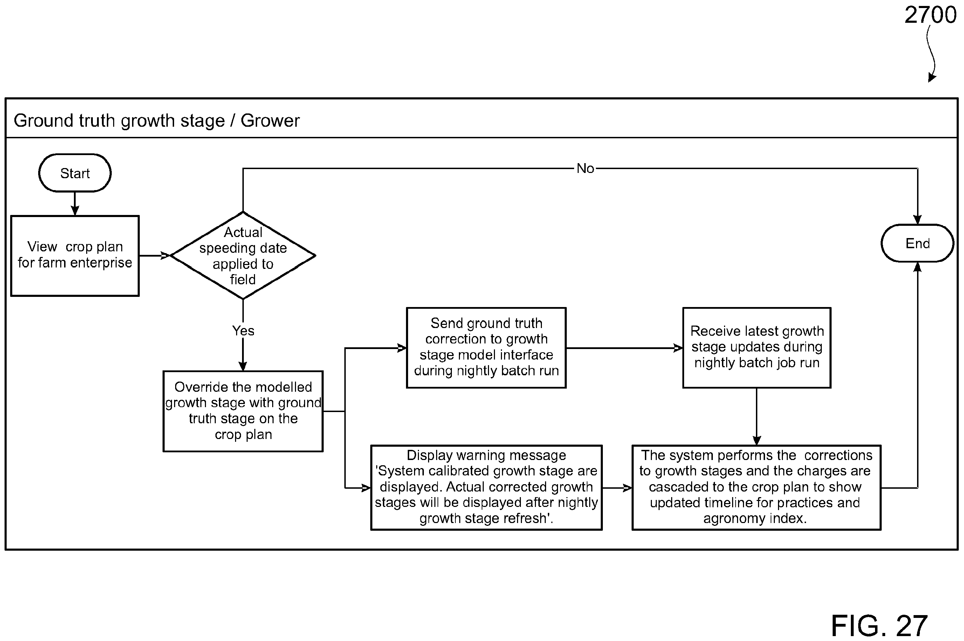

Using computer system 200, a user can also select and view details of a growth stage for a crop, and correct a growth stage predicted by a model. For example, if the user finds that the current growth stage displayed is not correctly reflect the actual growth stage in the field for the crop (e.g., due to conditions different than those predicted at the outset of the season), the user can override system growth stage data. This gives the user the flexibility and option to change the ground truth growth stage to align the growth of the crop with the growth stage timeline data displayed in the crop plan, updating the crop plan in season. Further, as part of the crop plan, computer system 200 allows the grower user to view the growth stage timeline for the crop, providing the grower user with accurate and daily information about growth stage forecast and growing degree units (GDUs). Figure 26 is a flow chart of an example method 2600 for viewing growth stage details using computer system 200. Figure 27 is a flow chart of an example method 2700 for overriding a ground truth growth stage using computer system 200.

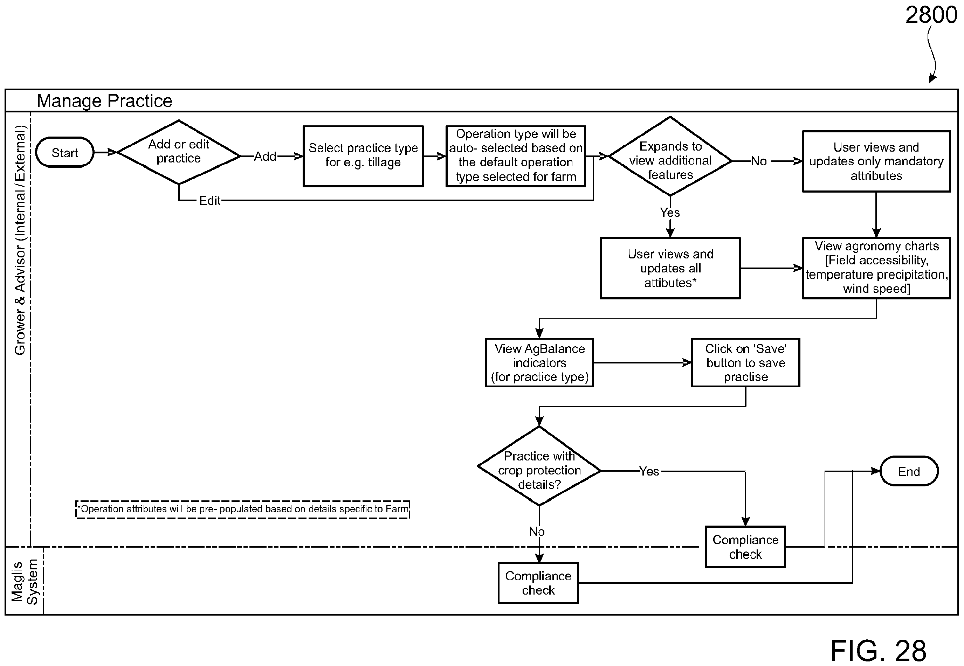

To manage the crop plan (e.g., at block 542 (shown in Figure 6)), the user can add and edit one or more practices associated with the crop plan. For example, a user can add a practice that is mapped to a template such that the user can modify the crop plan according to his or her own requirements. Further, a user can add desired products to a practice to tailor the crop plan. The user can also edit the practice and associated attributes using computer system 200 to tailor the crop plan. Figure 28 is a flow chart of an example method 2800 for managing a practice using computer system 200.

Computer system 200 also allows the user to generate a product order list. Specifically, using computer system 200, the user can accumulate a comprehensive list of products to be applied as part of the crop plan. Computer system 200 allows the user to generate and send a .pdf of the product order list. For example, the user may send the product order list to a retailer as part of a product order, in order to obtain the actual products required to implement the crop plan. The products may be aggregated at a crop plan level, at a farm level, at a field level, and at an area level. Further, the user can selectively choose which products are included in the product order list. The generated list may be sent by e-mail (e.g., as a .pdf document) to a retailer for inventory purposes.

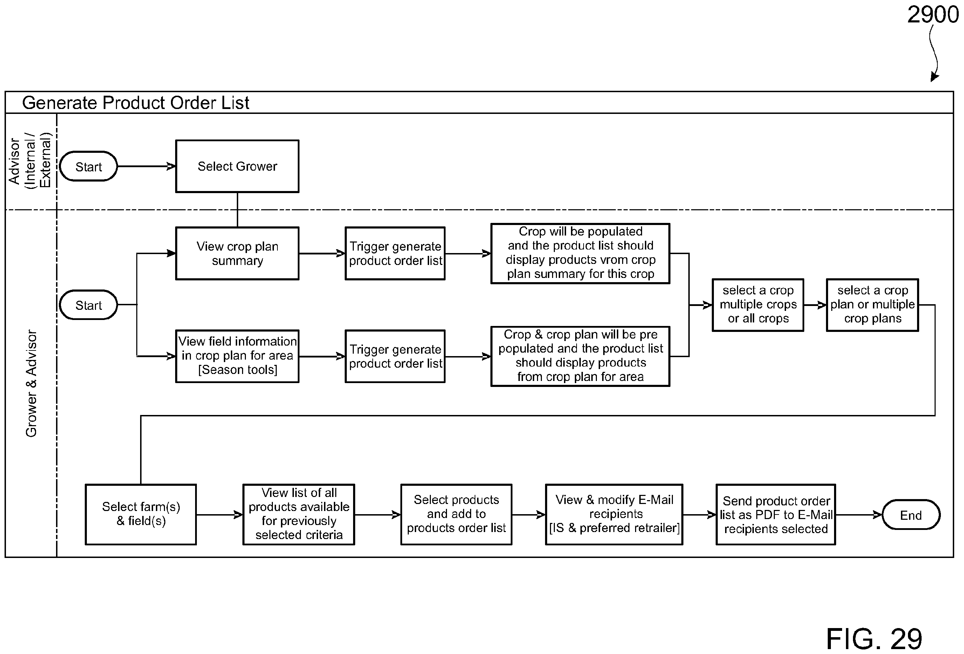

In this embodiment, a search pane enables the user to filter the products for a crop at the crop plan, farm, and field level. Further, the product order list accumulator has two tables. A first table contains all products aggregated for a crop at the crop plan, farm, and field level. It implicitly also contains all the products associated with an area. The user can select and move products from the first table to the second table. The list of products in the second table is used to generate the .pdf product order list. The products in the second table are also added to a products summary table. Figure 29 is a flow chart of an example method 2900 for generating a product list using computer system 200.

In this embodiment, computer system 200 also allows the user to view associated growers, fields, retailers, and demo plots. These may be viewed in a map view, or a list view. Further, growers can be searched in the map view and list view. A tailored growth plan and crop rotation history may also be viewed using computer system 200. Accordingly, computer system 200 assists a user in viewing details of growers and fields in a map view and a summarized list view.

For advisor users, the map and list views provide a good understanding of which growers are associated with the user, the fields of each grower, the details of associated retailers, and demo plot details. Further, this allows the user to view the profile details of the grower, and the crop plan for each field of the grower. The advisor user can also manage associated growers and view crop history data for each grower.

For grower users, the map and list views provide many details in a single display. For example, the grower user can find details of all his fields, associated crop plans, demo plots, and preferred retailer details under a single section. The map view also provides a platform to pictorially view the fields. Further, the grower user can also view historical crop details.

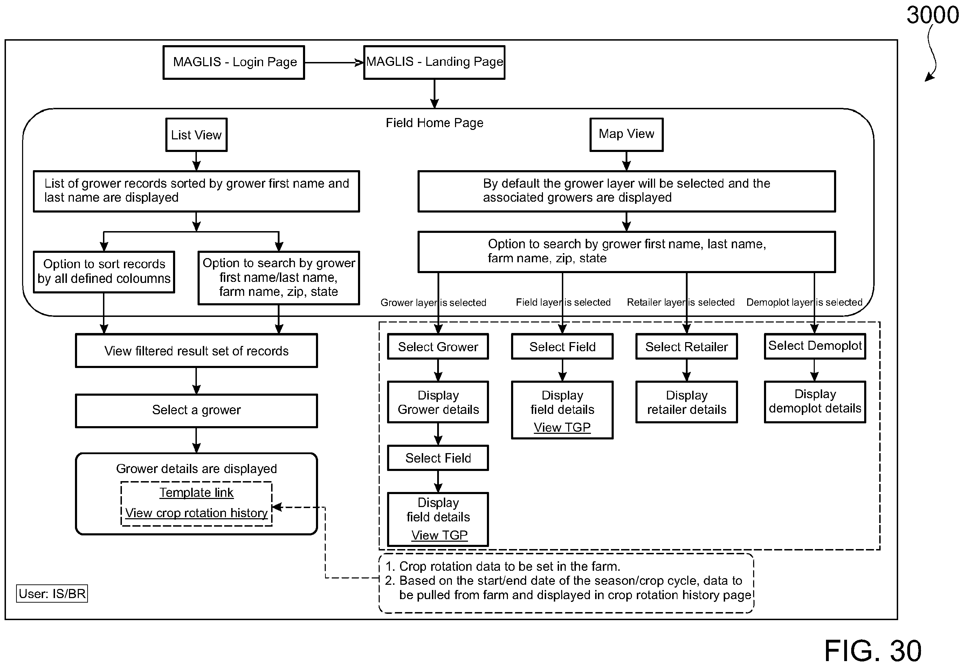

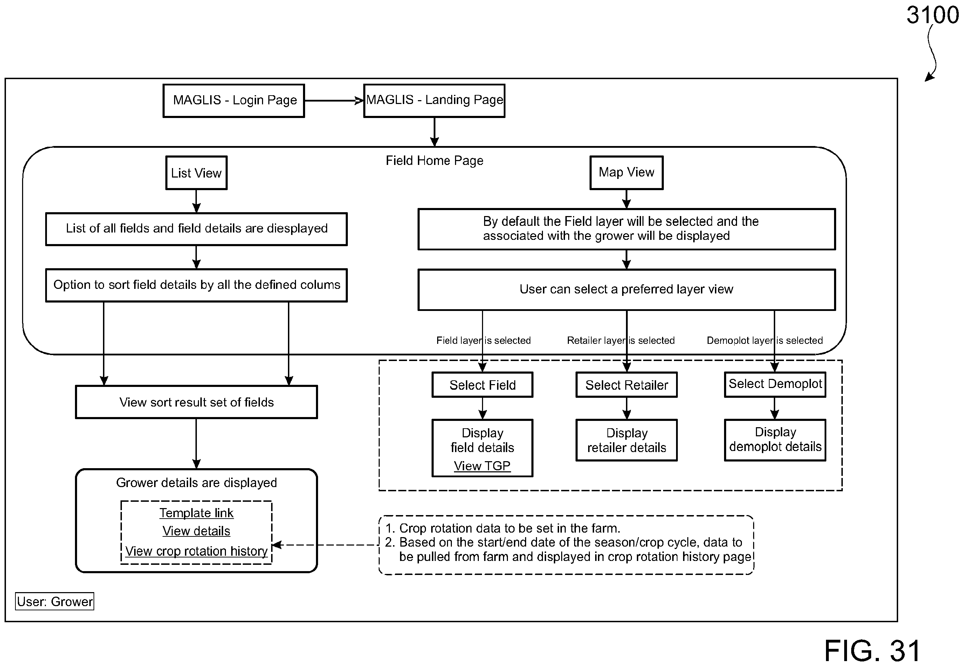

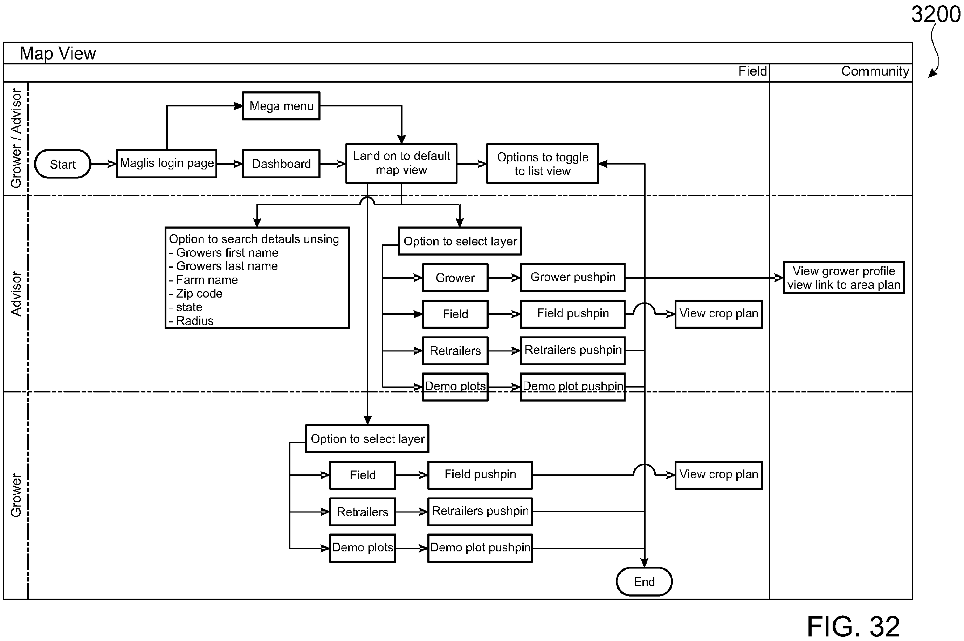

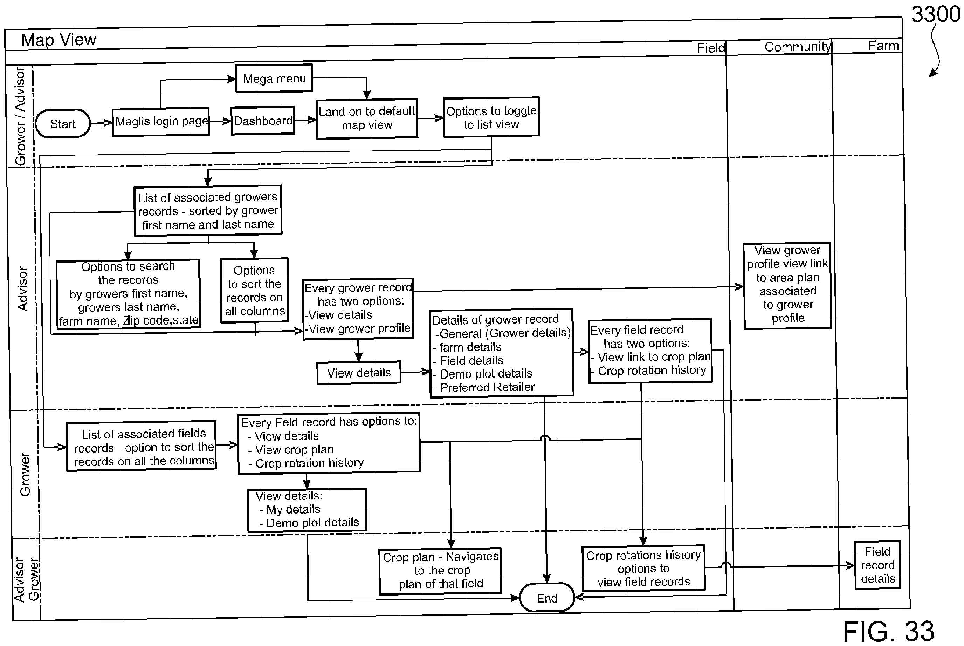

Figure 30 is a flow chart of an example method 3000 for generating and manipulating list views and map views for an advisor user using computer system 200. Figure 31 is a flow chart of an example method 3100 for generating and manipulating list views and map views for a grower user using computer system 200. Figure 32 is a flow chart of an example method 3200 for managing map views using computer system 200. Figure 33 is a flow chart of an example method 3300 for managing list views using computer system 200.

Computer system 200 also enables the user to plan a season by viewing multiple crop plans. Specifically, using computer system 200, the user can view a list of all crop plans associated with growers for the current season and the next season. Further, the user can assign a crop plan for the current season or the next season to a field associated with the user.

For example, an advisor user can view all farms and fields set up for a grower, as well as crop plans associated with those farms and fields. The advisor user can also view a summarized view of the plan for the current and next seasons. Computer system 200 also gives the advisor user the option to navigate to a crop plan summary for the grower, and to view associated farm and field details for the grower.

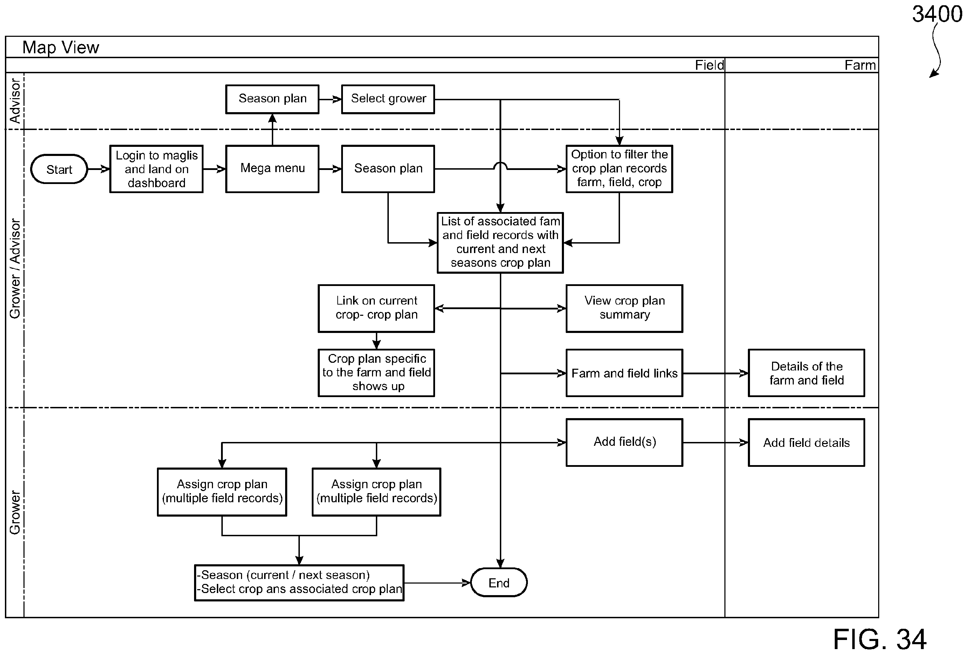

For a grower user, the user can view all associated season plans and details for the current crop plan. The grower user can also view a summarized view of the plan for the current and next season. Computer system 200 also allows the grower user to assign a crop plan to a particular field for the current season or the next season. The grower user can also navigate to a crop plan summary, and can add fields by navigating to a farm section using computer system 200. Figure 34 is a flow chart of an example method 3400 for viewing and managing a season plan using computer system 200.

As described above, users can manage a crop plan based on one or more crop plan recommendations. For example, in method 500 (shown in Figure 5), advisor recommendations may be generated at block 544. Accordingly, using computer system 200, users can generate, view, and accept crop plan recommendations. For example, an advisor user may generate a recommendation for a grower user, and the grower user can accept that recommendation as part of their crop plan. Specifically, using computer system 200, a user can select a crop plan across a farm enterprise and area or individual fields. The user can then publish a recommendation to a grower for the selected crop plan. The grower can then accept the published recommendation.

In this embodiment, the published recommendations are presented to the grower as "Advisor Recommendations". The recommendations may include, for example, suggesting the grower add a new practice into the existing crop plan, or suggesting minor changes to a product application in an existing practice. The grower can accept or decline the recommendations. Once accepted, the recommendation affects the associated crop plan (and may also affect compliance and sustainability by extension).

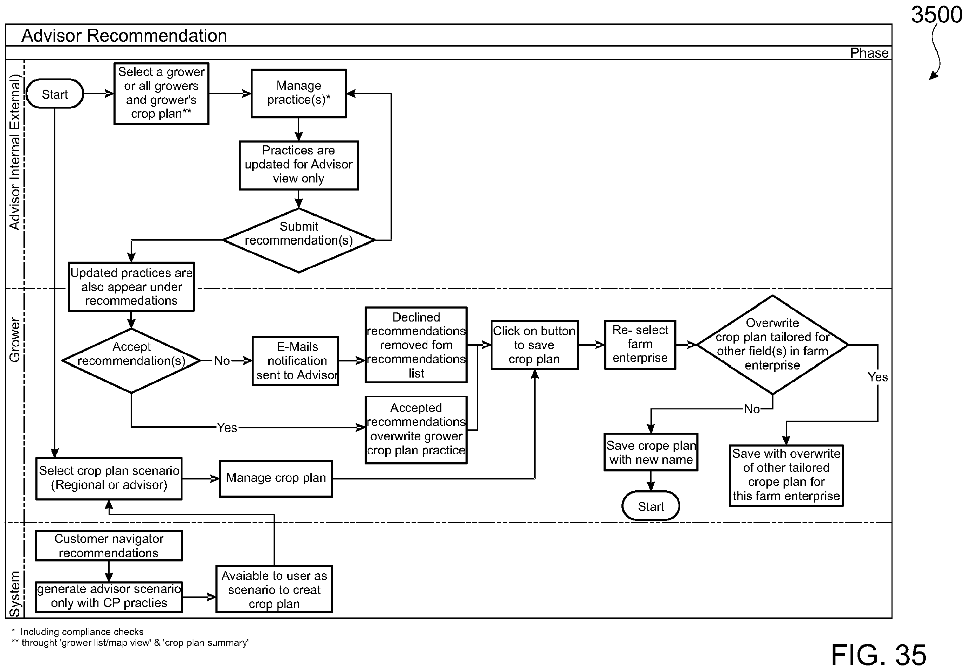

For the advisor user, publishing a recommendation is a two-step process: i) converting to a recommendation, and ii) publishing the recommendation. Specifically, the advisor user may first make changes to the practice details. Then, the practice changes are converted into a recommendation. The advisor user can selectively choose which fields, areas, crops plans for which the changes will be converted. Then, the advisor can publish the converted recommendations (either at the individual field/crop plan, or in bulk to all fields/crop plans of a grower). Figure 35 is a flow chart of an example method 3500 for generating a crop plan recommendation using computer system 200.

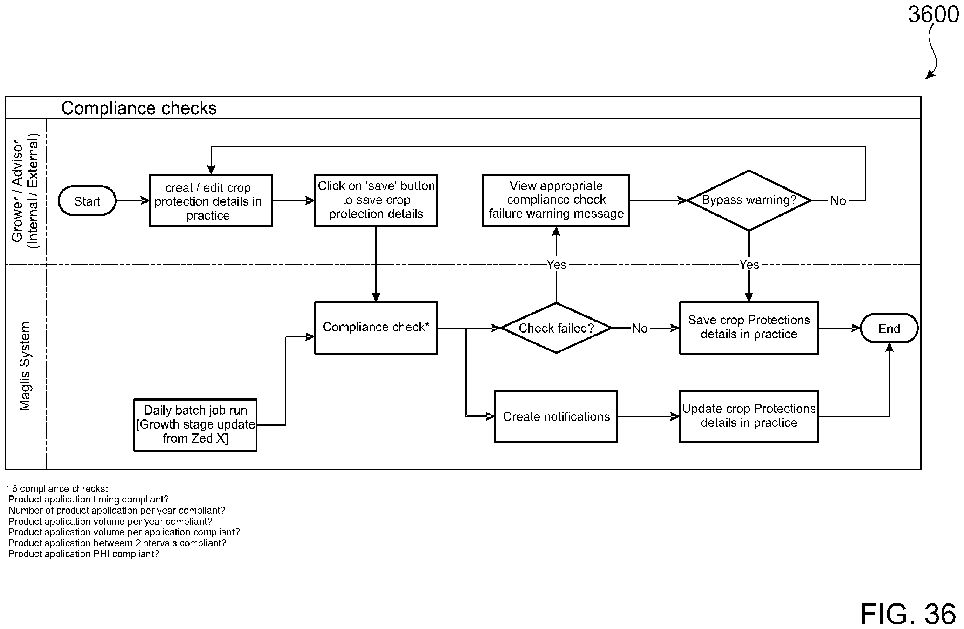

As discussed in regards to Figure 5, after managing a crop plan, a compliance check may be performed at block 546. The compliance check analyzes the compliance (e.g., with product labels) for one or more product applications defined in the managed crop plan. Figure 36 is a flow chart of an example method 3600 for performing a compliance check using computer system 200.

Computer system 200 also allows a user to add, edit, assign, update, and delete tasks for one or more fields. For example, a user can view tasks in a calendar view or list view, create a task for a field to ensure a specific activity will be done on a scheduled date, add inputs based on crop/available crop protection products/available fertilizers, and mark tasks as completed. The task information may also be used to generate a field record (described above), which may be referred to for a practice in a crop plan. Tasks may be created through a crop plan or created directly in a task management module. Once tasks are completed, a completion status is included in the associated crop plan. Tasks may be created and edited, for example, after completion of method 500 (shown in Figure 5).

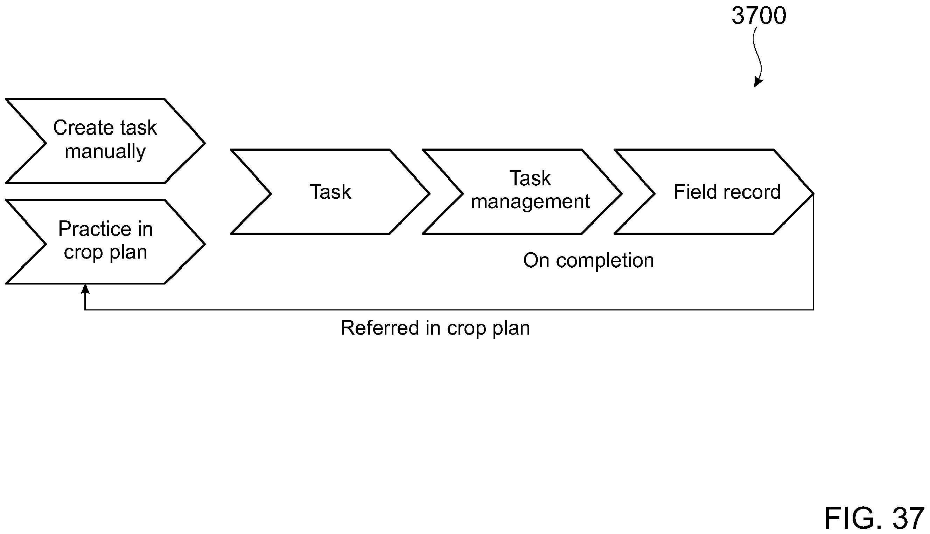

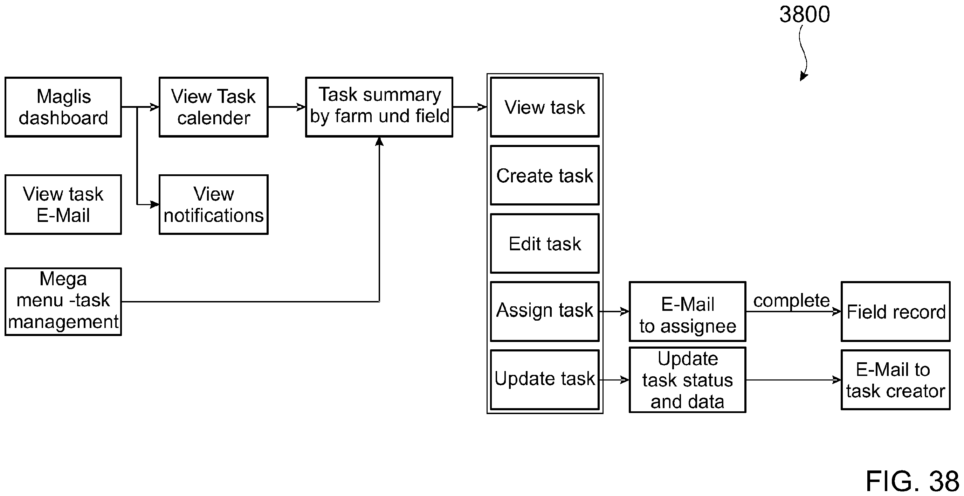

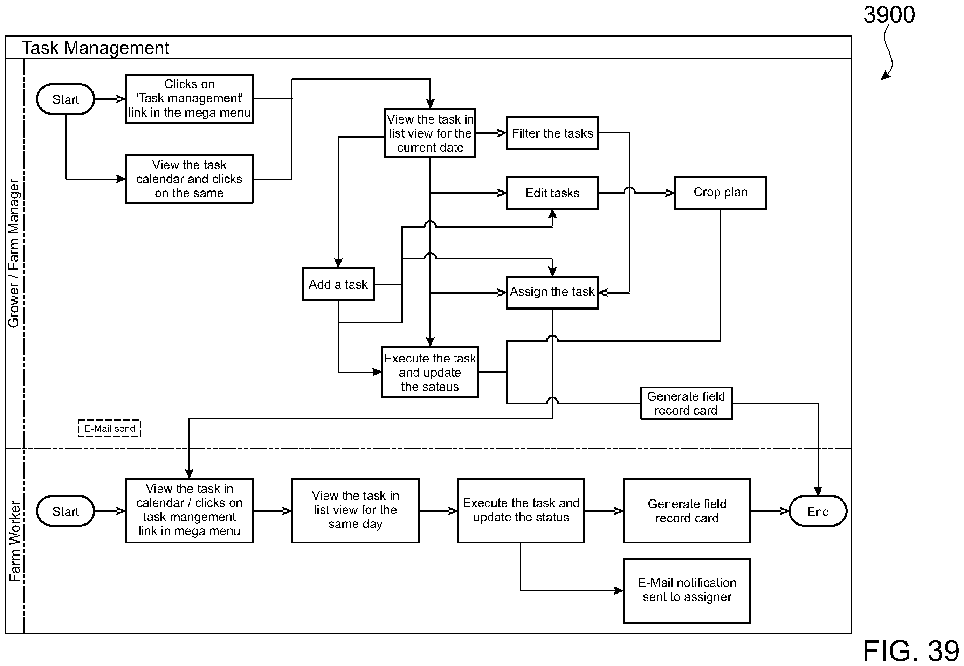

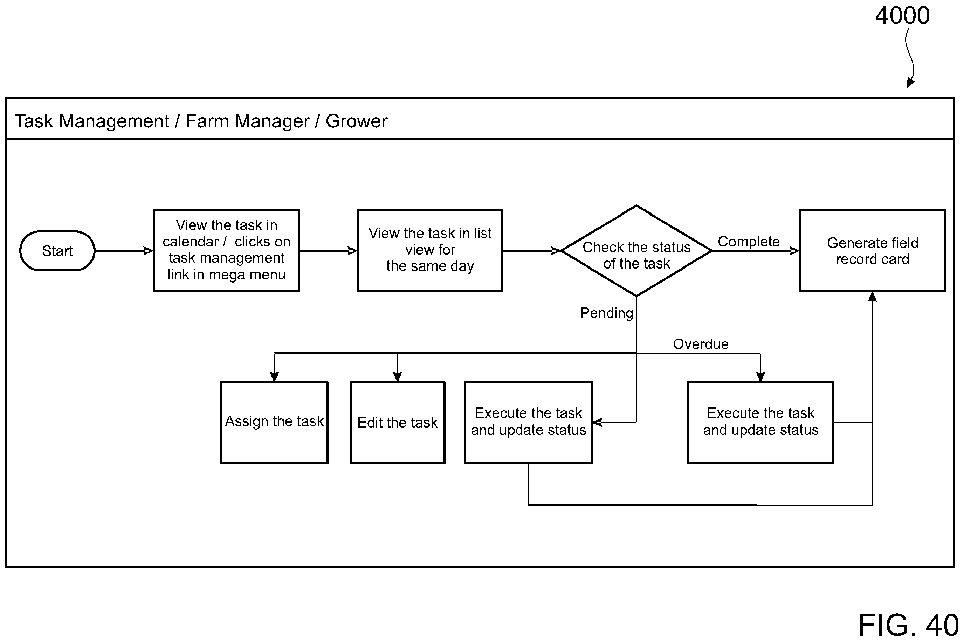

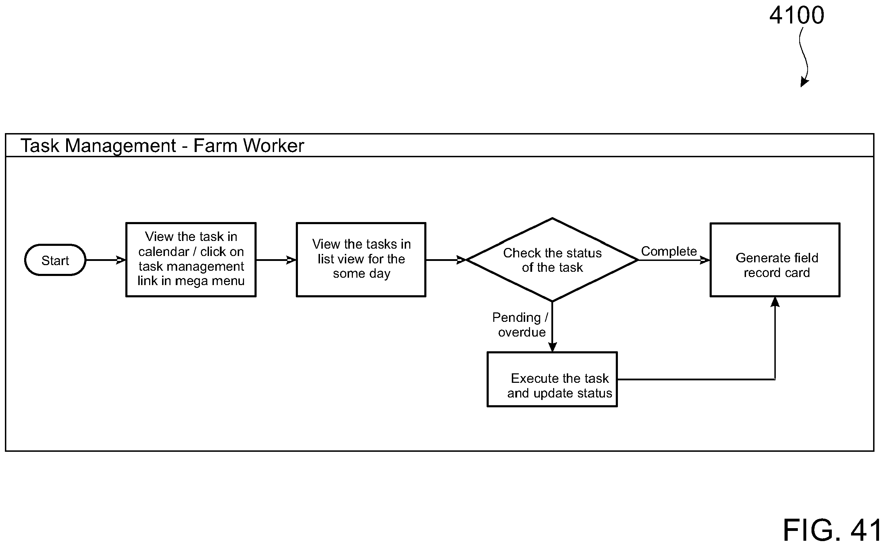

Figure 37 is a flow chart of an example method 3700 for managing tasks using computer system 200. As shown in Figure 37, tasks may be generated manually (i.e., independent of a crop plan), or may be generated by converting an existing practice in a crop plan. Figure 38 is a flow chart of another example method 3800 for managing tasks using computer system 200. Figure 39 is a flow chart of another example method 3900 for managing tasks using computer system 200. Figure 40 is a flow chart of another example method 4000 for managing tasks using computer system 200. Figure 41 is a flow chart of another example method 4100 for managing tasks using computer system 200.

As discussed in detail later herein, sustainability reports may be generated based on conducting a sustainability assessment 560 for a proposed crop plan. In addition to the sustainability report, computer system 200 may also generate a plurality of general reports. For example, a task list widget displays a summarized view of tasks overdue or to be performed in the near future. A field overview widget displays a summarized view of a field and associated field records. A product list widget displays crop products, including price and quantity. A crop distribution widget displays a summarized view of a crop and a corresponding varietal distribution across fields/farms/growers associated with the user.

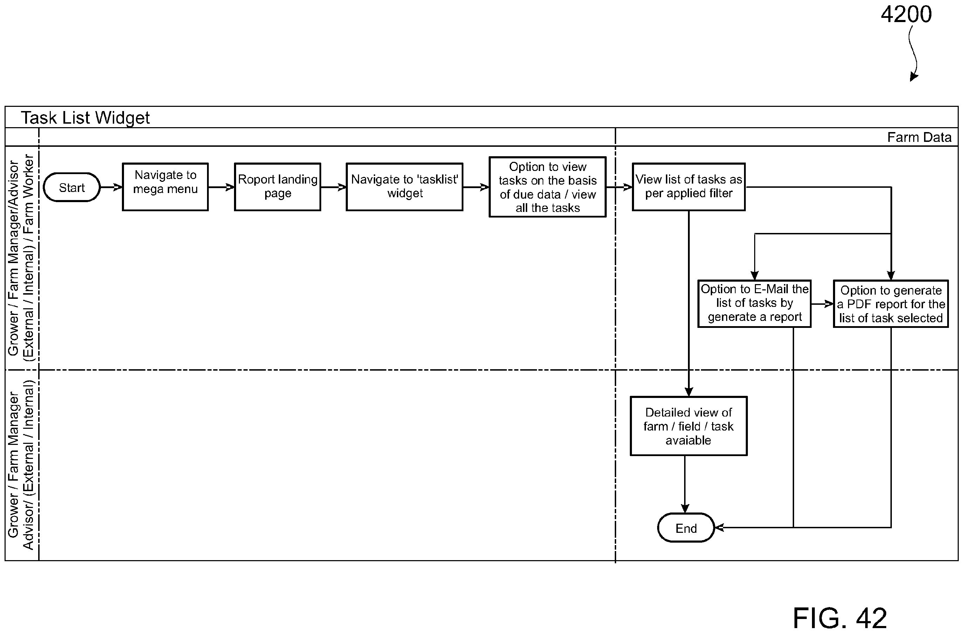

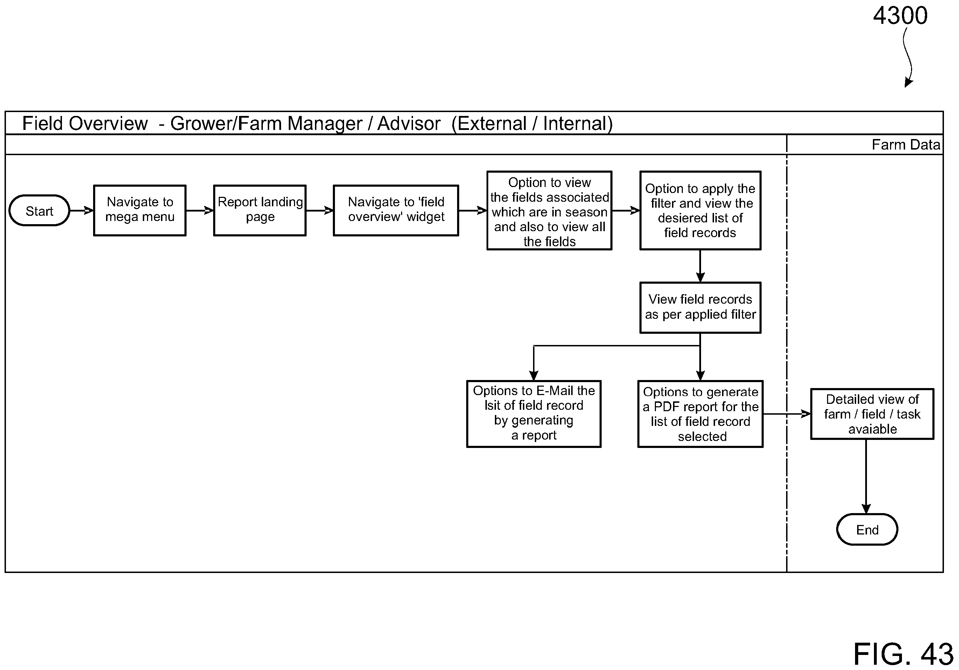

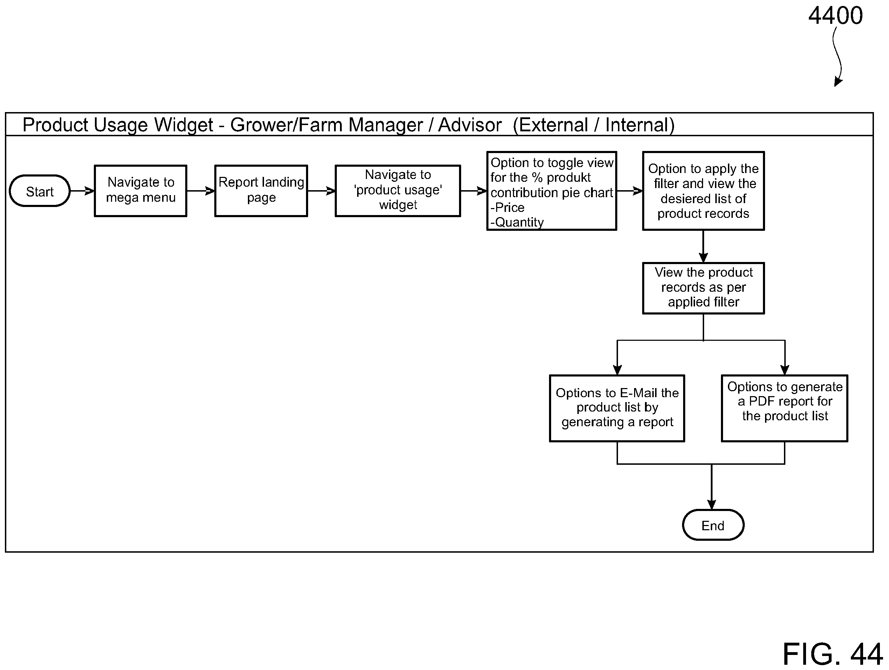

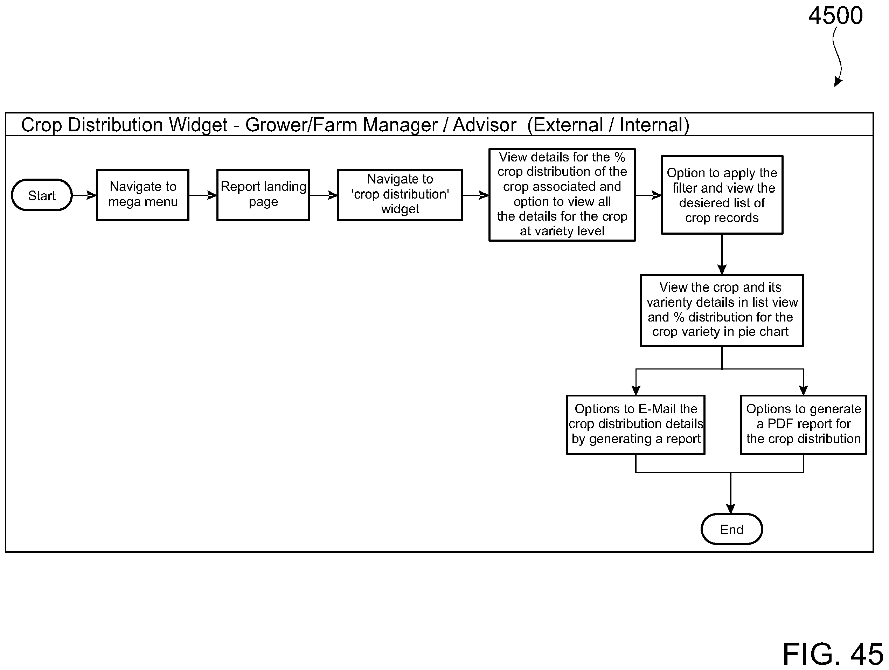

Figure 42 is a flow chart of an example method 4200 for using a task list widget using computer system 200. Figure 43 is a flow chart of an example method 4300 for using a field overview widget using computer system 200. Figure 44 is a flow chart of an example method 4400 for using a product usage widget using computer system 200. Figure 45 is a flow chart of an example method 4500 for using a crop distribution widget using computer system 200.

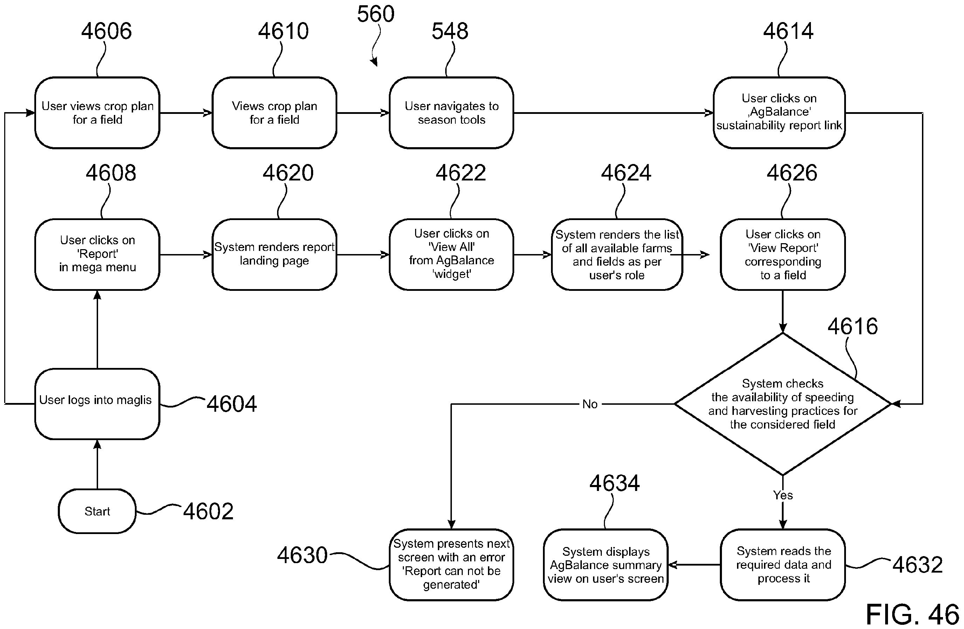

With reference back to Figures 5 and 6, in one embodiment the user grower or farm manager may further manage (e.g., assess and adjust) the crop plan in accordance with suitable sustainable growing practices. In particular, at 560 the user may instruct the computer system to conduct a sustainability assessment, and then modify the crop plan at 542 to bring the crop plan into more favorable sustainability practices. With reference to Figure 46, a sustainability assessment 560 may be performed by computer system 200 to generate a sustainability summary report 4634 that is viewable by the user. The sustainability assessment 560 begins at block 4602. At block 4604, the user logs into the system 200.

The sustainability assessment 560 may be requested by the user in two different manners. In one embodiment, the user may choose to view a crop plan for a particular field at blocks 4606 and 4610. At block 4612, the user navigates to season tools, and the user then selects a sustainability report option at block 4614. In another embodiment, the user may select a report option from a main menu at block 4608. Flow proceeds to block 4620, and computer system 200 renders a report landing page. The landing page may include, for example, a sustainability widget, a task list widget, a field overview widget, a product list widget, a crop distribution widget, or more suitably an AgBalance widget as at block 4622. At block 4622, the user selects a view all option, and at block 5624, computer system 200 renders a list of available farm and fields based on the user's role (e.g., the user's access privileges). The user may filter by, for example, grower name, farm name, field name, crop, and/or crop states. Further, information listed for each selectable field may include grower name, farm name, field name, crop, crop status, seeding date, harvesting date, and actions. At block 4626, the user selects a view report option for a particular field.

For both embodiments, once a sustainability assessment 560 is requested, flow then proceeds (e.g., from either block 4614 or block 4626) to block 4616 where the computer system 200 checks the availability of seeding and harvesting practices for the field associated with the crop plan. The status of the crop has three possible values: planned, in season, and harvested. If no planned activities for the crop have yet been executed, the value is "planned". If the crop status is "planned", practice data is used to calculate different indicator scores (as described in further detail below). If a planned practice or seeding practice has been executed, the value is "in season". If the crop status is "in season", actual field records, task data, ad-hoc tasks, and practice data are used to calculate different indicator scores. For the calculations, field record data and task data are used instead of practice data, if available. If a field record on harvesting practice is available, the value is 'harvested'.

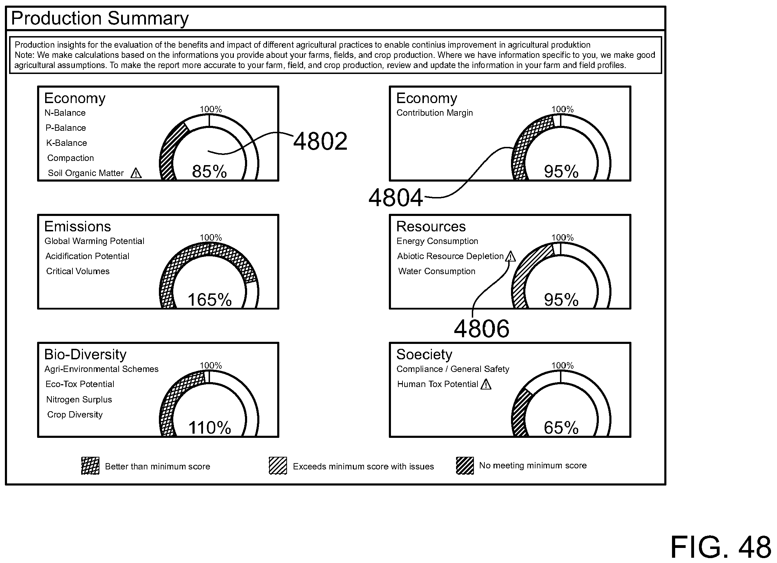

If seeding and harvesting practices for the selected field are not available, an error message is presented at block 4630. If seeding and harvesting practices are available, computer system 200 reads at block 4632 all required data needed to determine the sustainability assessment and the displays the sustainability report at block 4634. Computer system 200 gives user the option to print the sustainability report, generate a .pdf version of the sustainability report, or email the sustainability report. A sample sustainability report is illustrated in Figure 48.

As used herein, the sustainability assessment 560 is based on determining a "level" for at least one, and more suitably a number of different "indicators" with each indicator being indicative of one or more aspects of good practices in sustainability. In one particularly suitable embodiment, the sustainability assessment 560 comprises determining a "score" for one and more suitably more than one sustainability "category," with the score for each category being a function of the determined levels of one or more indicators (i.e., subcategories) that are relevant to the sustainability category. As seen in Figure 48, in one embodiment the sustainability assessment 560 is based on determining a score for six different sustainability categories, including Soil Management, Emissions, Bio-Diversity, Economy, Resources and Society. It is understood that in other embodiments the sustainability categories may be identified other than by these labels and remain within the scope of this invention. It is also understood that more or less than six sustainability categories may be used in the sustainability assessment 560.

As is also seen in the sample sustainability report of Figure 48, a specific indicator or group of indicators is associated with each sustainability category. For example, the score determined for the Soil Management category is a function of five different indicators (e.g., N-Balance, P-Balance, K-Balance, S-Balance, Compaction and Soil Organic Matter), while the score determined for the Economy category is a function of a single indicator (e.g., Contribution Margin). The Table below identifies the indicators associated with each of the six respective sustainability categories identified in the sustainability report of Figure 48. The Table further provides a brief description of each indicator, tips that can be provided as part of the sustainability report on how to improve the determined level of each indicator, and the benefits of doing so.

**Table: Sustainability Categories and Associated Indicators**

| **Indicator Name** | **Indicator Description** | **Tips for better performance** | **Benefits** | |
|---|---|---|---|---|
| **Bio- Diversity** | | | | |
| AES (Agro-Environmental Schemes) | Indicates efforts to protect animals and other living organism to increase farm biodiversity. A higher number of schemes or programs indicates a better sustainability performance. | 1. Adoption of more agri-environmental schemes | 1. Less potential to impact biodiversity. 2. Promotion of | |
| | | | safe ecosystems for living organisms. | |
| Eco-Toxicity | Measures the environmental impact from the use of farming resources such as crop protection and fertilizer products on ecosystems. A lower degree of eco-toxicity indicates a greater sustainability performance. | 1. Use of appropriate product stewardship measures | 1. Less potential to impact biodiversity. | |
| | | | 2. Promotion of safe ecosystems for living organisms. | |
| | | 2. Integrated Pest Management strategies | | |
| | | | 3. Reduced air | |
| | | 3. Use of selective (low off-target eco-toxicity) crop protection products | and water pollution. | |
| Nitrogen Surplus | Indicates the potential impact from the use of excess Nitrogen (beyond the crop's nutrient requirements) on farm biodiversity. A lower amount of nitrogen surplus indicates a better sustainability performance. | 1. Precise fertilizer application (less excess fertilization) | 1. Less potential to impact biodiversity. | |
| | | | 2. Reduced air and water pollution. | |
| Crop Diversity | Measures the number of different crops cultivated on a given field over a defined period of time. A higher number of elements in the crop rotation indicate a better sustainability performance. | 1. Increasing the number of crops cultivated on a given field | | 1. Less potential to impact biodiversity. |
| | | | | 2. Increased likelihood to break disease cycles. |
| | | 2. Use of different species | | |
| **Emissions** | | | | |
| GWP (Global Warming Potential) | Measure of the effect of emitted greenhouse gases (e.g. carbon dioxide, nitrous oxide) on climate change. Contributions from both on farm activities and pre-chain product manufacturing are considered. | 1. Precise fertilizer application (less excess fertilization) | 1. Less potential impact on climate change | |
| | | 2. Reduced on farm fuel consumption | | |
| Acidification Potential | Indicates the effect of acidifying emissions (e.g. SO2, NOx and NHx) on soil, groundwater, surface waters, ecosystems and materials (buildings) . Contributions from both on farm activities and pre-chain product manufacturing are considered. | 1. Precise fertilizer application (less excess fertilization) | 1. Less potential to generate acidifying emissions (acid rain) | |
| | | | 2. Good nutrient availability for crop | |
| | | 2. Reduced on farm fuel consumption | | |
| Critical Volumes (i.e., Water Emissions) | Indicates the potential to effect aquatic ecosystems through emissions into the water bodies around the farm, e.g., by leaching, runoff and erosion. | 1. Precise fertilizer application (less excess fertilization) | 1. Reduced potential to impact aquatic ecosystems | |
| | | 2. Reduced crop protection product application intensity | | |
| | | 3. Use of appropriate product stewardship measures | | |

| **Resources** | | | | |
|---|---|---|---|---|
| Fuel Consumption | Indicates fuel consumption due to operations during crop production | 1. Adopting practices with a higher fuel efficiency (e.g. Direct seeding, min- / no - till, etc.) | | 1. Reduced operating costs. |
| | | | | 2. Higher energy efficiency. |
| | | | | 3. Reduced emissions. |
| | | 2. Making use of "ready mix" products to reduce the number of trips across a field to apply products | | |
| Abiotic Resource Depletion (ADP) | Indicates the potential to deplete non-renewable natural resources, such as phosphate, iron ore and crude oil. | 1. Precise fertilizer application (less excess fertilization) | | 1. Reduced consumption of non-renewable resources |
| | | 2. Reduced on farm fuel consumption | | |
| | | 3. Use of renewable energy | | |
| Water Consumption | The amount of freshwater used for irrigation and mixing of crop protection and fluid fertilizers. | 1. Low irrigation intensity. | | 1. Higher water application efficiency. |

| **Soil Management** | | | | |
|---|---|---|---|---|
| N-balance | Indicates the balance of Nitrogen on the field. An optimum balance of soil nutrients is defined, higher or lower levels indicate a lower sustainability performance. | 1. Precise fertilizer application (avoiding nutrient deficiency or nutrient excess) | | 1. Optimized fertilizer application |
| | | | | 2. Reduced operating costs. |
| | | | | 3. Reduced air and water pollution. |
| P-balance | Indicates the balance of Phosphorus on the field. An optimum balance of soil nutrients is defined, higher or lower levels indicate a lower sustainability performance. | 1. Precise fertilizer application (avoiding nutrient deficiency or nutrient excess) | | 1. Optimized fertilizer application |
| | | | | 2. Reduced operating costs. |
| | | | | 3. Reduced air and water pollution. |
| K-balance | Indicates the balance of Potassium on the field. An optimum balance of soil nutrients is defined, higher or lower levels indicate a lower sustainability performance. | 1. Precise fertilizer application (avoiding nutrient deficiency or nutrient excess) | | 1. Optimized fertilizer application |
| | | | | 2. Reduced operating costs. |
| | | | | 3. Reduced air and water pollution. |
| S-balance | Indicates the balance of Sulfur on the field. An optimum balance of soil nutrients is defined, higher or lower levels indicate a lower sustainability performance. | 1. Precise fertilizer application (avoiding nutrient deficiency or nutrient excess) | | 1. Optimized fertilizer application |
| | | | | 2. Reduced operating costs. |
| | | | | 3. Reduced air and water pollution. |
| Soil Organic Matter | Measures the soil carbon content. Soil carbon content makes a huge contribution to soil health and future growing potential. Additionally, soil plays an important role in carbon storage, reducing greenhouse gas emissions into the atmosphere. | 1. Leaving crop residues on the field | | 1. Increased soil resilience to compaction and erosion |
| | | 2. Use of organic (carbon containing) fertilizers | | |
| | | | | 2. Better water and nutrient storage |
| | | 3. Low tillage intensity 4. Selection of plants in crop rotation | | 3. Higher microbial activity and hence nutrient availability |
| Erosion | Indicates the loss of fertile soil influenced by the slope, soil type, topography, cropping system and management practices of the field and the rainfall intensity | 1. Low tillage intensity | | 1. Maintaining fertile soil |
| | | 2. Utilizing practices to reduced erosion losses (cover crops, contour plowing, etc.) | | 2. Avoiding soil losses |

| **Economy** | | | | |
|---|---|---|---|---|
| Contribution Margin | Indicates the economic viability of the field (revenue minus operating costs) | 1. Reducing operating costs | | 1. Assess the competitiveness / profitability of the farm |
| | | 2. Achieving higher yield | | |
| **Society** | | | | |
| Compliance/General Safety | Indicates professional training for farm workers, in terms of the amount of time invested in occupational training. This indicator thus takes into account measures like seminars, trainings, etc. taken by workers and farmers, but not formal school or university education. | 1. Increasing the number of training hours per year per worker | | 1. Maintaining and fostering high standards of agricultural practices |
| Human Tox Potential | Potential impact from the use of farming resources such as crop protection and fertilizers products on Human Health A lower degree of human toxicity indicates a greater sustainability performance. | 1. Use of low-toxicity products | | 1. Safeguarding human health |
| | | 2. Following recommended dosage rate | | |
| | | 3. Use of appropriate personal protective equipment (respirator, gloves, long-sleeved shirt, long trousers, goggles, etc.) during product mixing and application. | | |
| People fed | Measures the potential to feed people based on the crop yield, crop energy content, and dietary energy requirements of people. | 1. Achieving higher yield | | 1. Contribution to feeding a growing world population. |

Data and information used to determine the indicator levels includes, for example, the scenario input by the user as well as all information input by the user or generated by the system relating to the crop plan, e.g., the field information, crop information, soil information, practices relating to the crop plan, etc. Databases containing other input needed to determine the levels for the various different indicators are also included in the computer system 200 as illustrated in Figure 6. For example, without limitation, such databases may include a pesticide database 562, a fertilizer database 564, a seed database 566, a fuel database 568, a lifecycle assessment (LCA) database 570, an agro-environmental scheme (AES) database 572, a crop database 574 and a benchmark database 576 (the details of which are discussed in further detail below). In one embodiment, the levels of each indicator are determined in accordance with the methodology described in the document "AgBalance Technical Background Paper," (obtainable: https://agriculture.basf.com/bin/bws/documentDownload.en.8797521095125) the disclosure of which is incorporated herein by reference.

In one suitable embodiment, to determine the sustainability score for a respective category, a weighting factor is assigned to each determined indicator level (e.g., associated with the category) to determine a total score for that category. The weighting factor for each respective indicator is a function of the country and crop. The weighting factors may be stored in one of the databases or may be determined by the computer system based on input data. The indicator levels for each of the indicators are multiplied by the corresponding weighting factors to determine the weighted contribution of each indicator level to the category score. The weighted contributions are then aggregated to determine the category score.

A similar method is undertaken to determine a benchmark score against which each respective category score is compared to assess whether the crop plan being assessed meets a benchmark sustainability level for that category. The benchmark database 576 includes the relevant benchmark data. Based on input data or stored data such as the country or region in which the crop is located, the type of crop and the category for which a score is being determined, the computer system 200 uses this data along with the benchmark database to determine a benchmark level for each indicator associated with the respective category. The weighting factors for each respective indicator are again used. The benchmark levels for each of the indicators are multiplied by the corresponding weighting factors to determine the weighted contribution of each benchmark indicator level to the benchmark category score. The weighted contributions are then aggregated to determine the benchmark category score.

This information may be displayed on the summary report as shown in the sample provided in Figure 48. For example, in the sample report the category score is compared against the benchmark category score and reported as a percentage of the benchmark category score (e.g., by dividing the determined category score by the benchmark category score). For example, in Figure 48, the score for the Soil Management category is 85% of the benchmark score for that category, while the score for the Bio-Diversity category is 110% of the benchmark score for that category. A visual indicator or meter 4804 is also provided to indicate that the score for each respective category falls within one of three considerations: 1) the category score meets or exceeds a predetermined minimum percentage of the benchmark and each of the indicator levels on which the category score is based is at a satisfactory level (in which case the meter is colored green, such as the Emissions category in Figure 48), 2) the category score meets or exceeds the predetermined minimum percentage of the benchmark but one or more of the indicator levels on which the category score is based is itself not satisfactory (in which case the meter is colored orange, such as the Resources category in Figure 48) and 3) the category score is below the predetermined minimum benchmark (in which case the meter is colored red, such as the Society category in Figure 48). In other embodiments, the meter 4804 may represent a comparison directly to the benchmark score instead of to a minimum percentage of the benchmark score and remain within the scope of this invention.

To further assist the user grower and/or farm manager, if the meter 4804 is colored orange - meaning that at least one indicator level is unsatisfactory - each indicator at issue is denoted with a visual warning indicator 4806 (e.g., a red triangle or other suitable indicator). For example, for the Resources category in Figure 48, the Abiotic Resource Depletion indicator is indicated as having an issue. Likewise, if the meter is colored red - meaning that the category score is below the minimum percentage of the benchmark score - the one or more indicator levels that are causing this low category score are denoted with a warning indicator (e.g., a red triangle or other suitable indicator). In the sample report of Figure 48, for example, the Soil Organic Matter indicator of the Soil Management category is indicated as being a driver of the low category score.

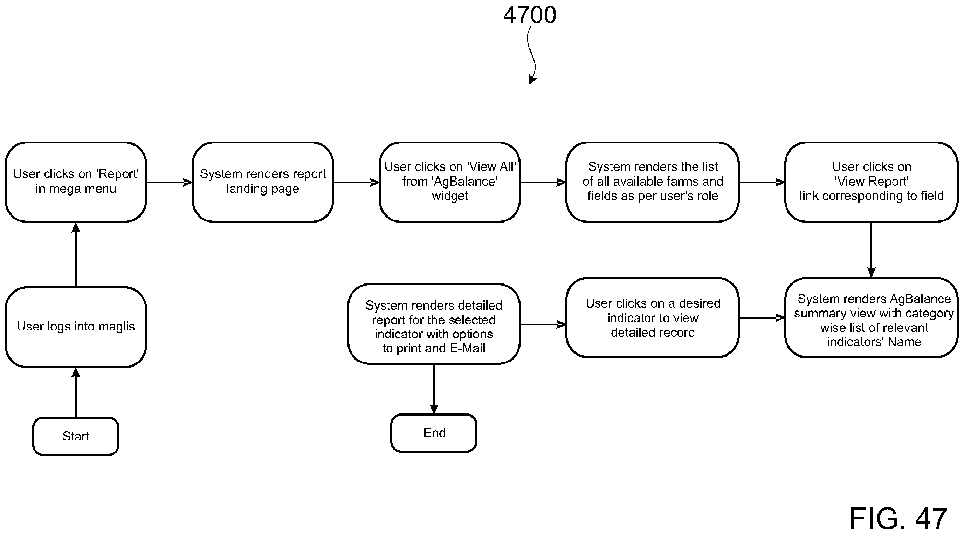

As illustrated in Figure 6, with the sustainability report generated, the user grower and/or farm manager may further manage the crop plan at 542 by modifying one or more aspects of the crop plan as a function of the sustainability assessment 560. The user may then perform a subsequent sustainability assessment 560 to re-check whether the crop plan is in accordance with good sustainability practices. To assist the user in determining which aspects of the crop plan to modify, in response to the sustainability report the user may instruct the computer system 200 to generate an indicator report for the one or more indicators identified as the issue. In one embodiment, from the sustainability report screen of Figure 48 the user may click on the indicator of interest (e.g., the one with the associated warning indicating 4806 - i.e., the red triangle in Figure 48). In other embodiments, the user may at any time generate a report for a particular indicator by following the selection method 4700 illustrated in Figure 47.

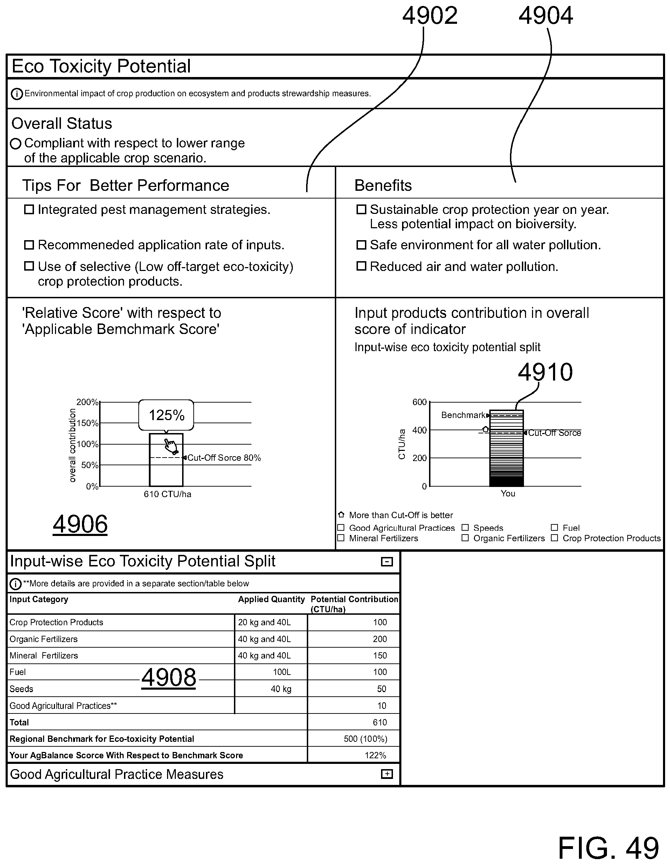

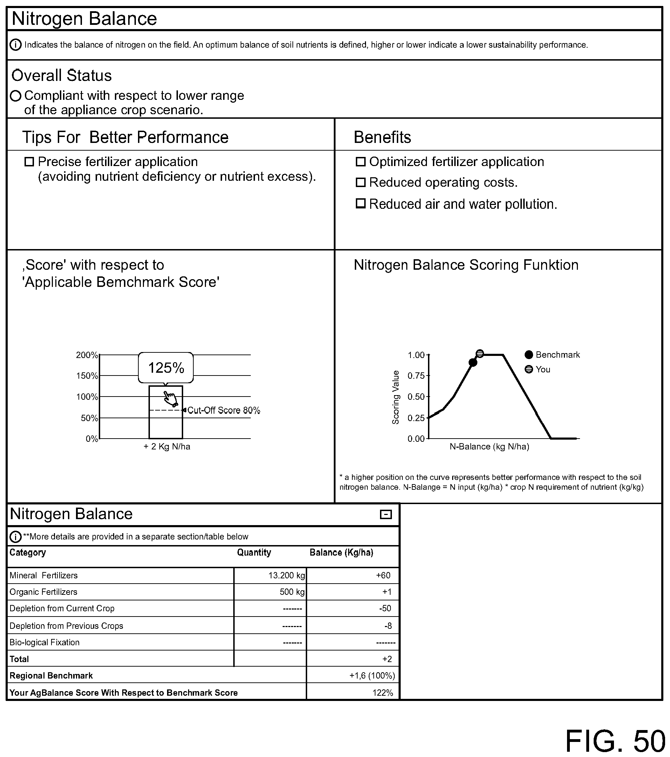

Figure 49 illustrates one example of an indicator report generated for the Eco-Toxicity Potential indicator of the Bio-Diversity category from the summary report of Figure 48. The indicator report provides the user with tips 4902 for better performance, i.e., for improving the indicator level, and benefits 4904 of doing so. This information is from the Table set forth above. The indicator further identifies at 4906 a relative indicator level with respect to an applicable benchmark level for that indicator. The benchmark level of the indicator (e.g., Eco-Toxicity Potential) is the contribution of that indicator level to the benchmark score of the category (e.g., Bio-Diversity) to which the indicator is associated. At 4908 the indicator report identifies the different inputs from the crop plan that are used to determine the indicator level (e.g., practices, products). For example, in the Eco- Toxicity Potential report in Figure 49, the identified inputs to the Eco-Toxicity level include crop protection products, organic fertilizers, mineral fertilizers, fuel, seeds and good agricultural practices. The list 4908 also identifies the contribution of each of these inputs to the determined indicator level. For example, in the illustrated report of Figure 49 the organic fertilizers accounts for nearly one-third of the overall indicator level. The relative contributions of each input is also displayed visually at 4910. Using this report, the user can readily identify which aspects of the crop plan can be modified at 542 to adjust the level of that indicator - and hence the overall category score for the category to which the indicator is associated. Figure 50 illustrates another indicator report, in this instance for the nitrogen balance (N-Balance) indicator of the Soil Management category.

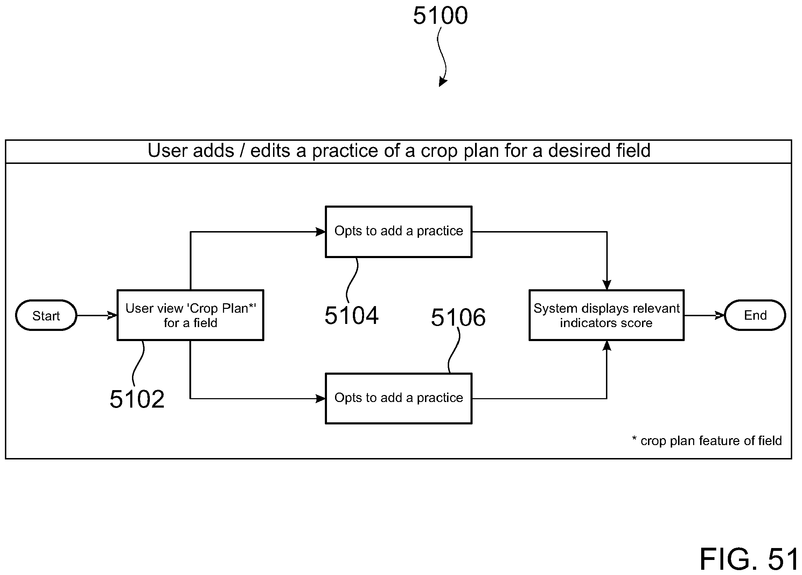

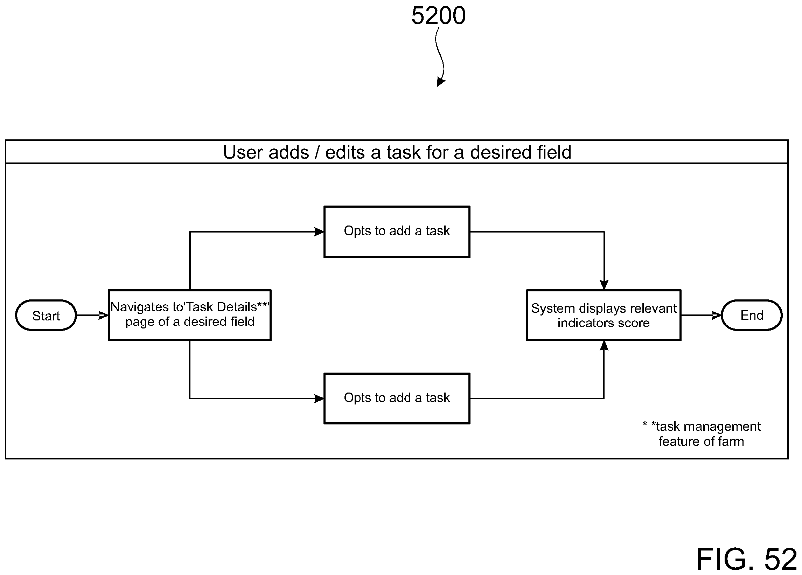

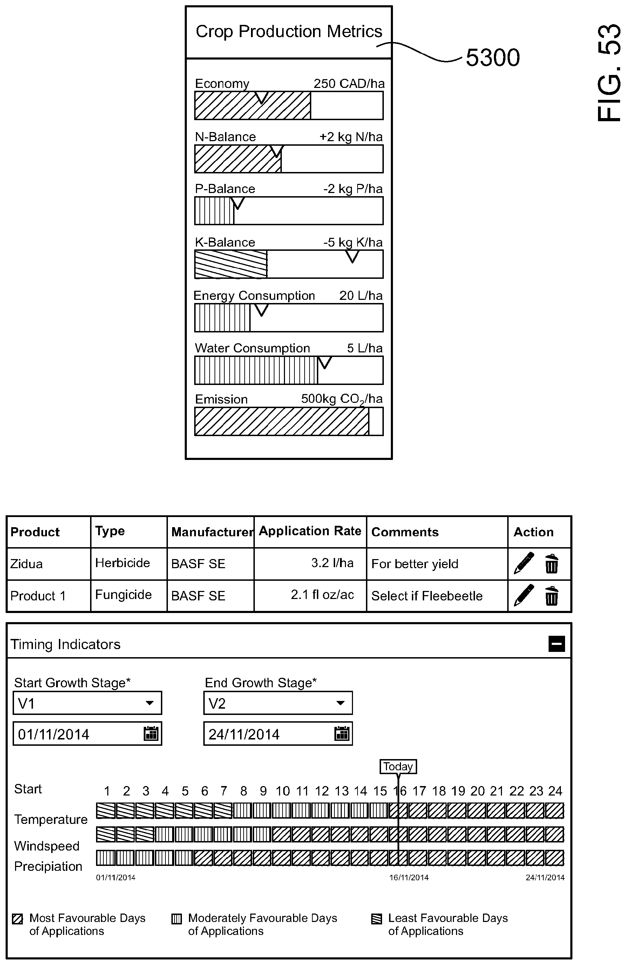

To manage the crop plan at 542 in response to the sustainability report (Figure 48) and subsequent review of the relevant indicator reports (Figures 49 and 50), the user grower and/or farm manager adds or edits the crop plan practices and/or tasks in accordance with the methods 5100, 5200 set forth in Figures 51 and 52, respectively. For example, with regard to adding or editing a practice in accordance with the method 5100 of Figure 51, the user views at 5102 the crop plan for the particular field and then may either add a practice at 5104 or edit an existing practice at 5106. In response the computer system 200 displays an Add Practice screen as in Figure 53, or an Edit Practice screen (not shown). In the sample Add Practice screen of Figure 53, the user is adding a crop protection practice in the form of spraying fertilizer distributed by BASF SE under the trade name Zidua. Upon adding or editing the practice, the computer system 200 re-determines the indicator levels and hence category score(s) for which the added practice is an input to the determinations thereof. The impacted indicator levels and category scores are identified in Figure 53 as the Crop Protection Metrics 5302. By re-determining the indicator levels and category scores in response to editing and/or adding a practice, the impact of such an edit or addition is readily seen by the user. This allows the user to further modify the crop plan while modifying the crop plan without having to run and review an entire sustainability assessment 560.

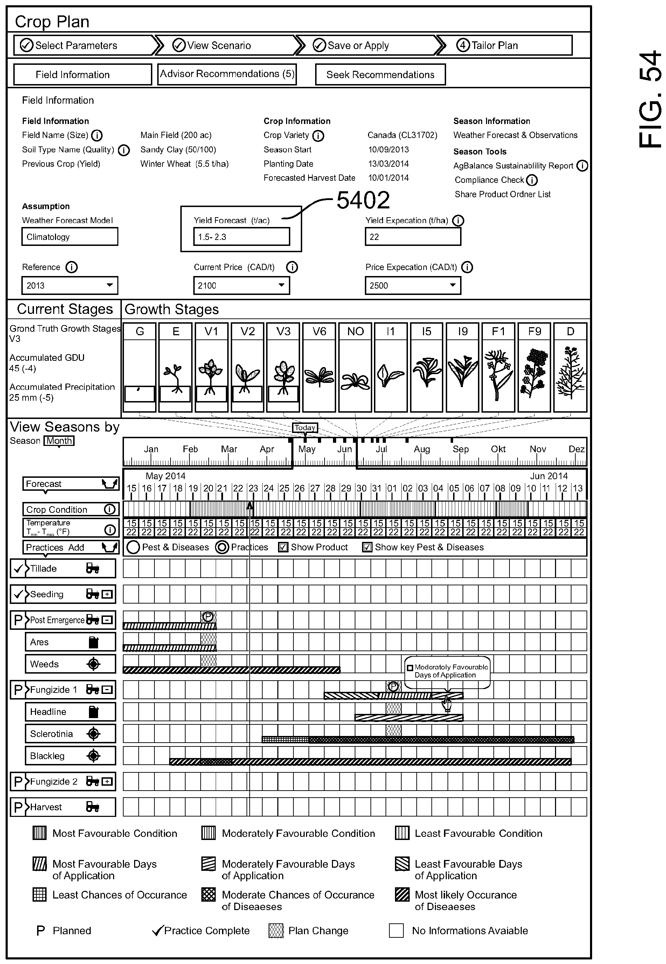

In another embodiment similar to that of Figure 22, the user may have the computer system 200 display an alternative Crop Plan screen, as illustrated in Figure 54. This Crop Plan screen displays various information relating to the crop plan generated by the user, such as field information, crop information and the various practices added, deleted and/or edited by the user. Each time a practice is added, deleted or edited, the Crop Plan screen is revised to reflect the particular change as well as the change to the various determined periods for undertaking the practices. In this manner, not only is the user alerted to the impact that practice additions, deletions or changes have on sustainability practices, but also on the suitable timing of the practices.

As illustrated at the green square in the Crop Plan screen of Figure 54, the computer system according to one embodiment is also configured to display a yield forecast 5402, i.e., a crop-at-harvest yield at the end of the maturity growth stage. The yield forecast 5402 display is a function of at least the field information (e.g., geographic location, soil type, etc.), crop information, and one or more of the practices included by the user in the crop plan. In one embodiment, the yield forecast displays a crop-specific, at-harvest yield based on soil and weather stresses between emergency and maturity, assuming optimum management practices.

In the illustrated embodiment, the user receives an alert as a visual display of a range of forecasted yield 5402. In particular, in the illustrated embodiment the displayed yield forecast is compared to what is otherwise expected to be a normal yield based on the field information and crop information, such as in a ten year average crop yield. A fraction, or ratio of the current season value to the normal yield is displayed. The displayed yield forecast 5402 is this ratio. For example, a yield forecast 5402 of less than 1.0 refers to a forecasted yield that is less than what would otherwise be expected to be a normal yield; a forecasted yield of 1.0 is equal to what would otherwise be expected as a normal yield; and a forecasted yield greater than 1.0 refers to a forecasted yield that is less than what would otherwise be expected to be a normal yield.

When a change is made to the crop plan, such as by adding, deleting or editing one or more of the practices, the yield forecast 5402 is also updated. In this manner, the user can also see the impact that any proposed practice changes have on the yield forecast. This can occur before planting or at any time during the growing season. More particularly, because the user is alerted to the impact that any changes to the crop plan has on the sustainability determination, the yield forecast and the displayed time windows for completing one or more of the practices, the user is able to adjust the overall crop plan - such as by adding, deleting and/or editing one or more of the practices - to achieve a balance between a suitable yield forecast, a suitable sustainability score and suitable time windows for completing the elected practices.

The various above disclosed embodiments are again summarized in the following paragraphs.

In embodiment a), a computer implemented agricultural monitoring method is provided which includes: receiving, at a computing device, input regarding a crop to be grown in a field, a growth stage cycle for said crop, and a practice associated with said crop, the practice comprising at least one of: seeding the field in which the crop is to be grown, tilling the field in which the crop is to be grown, irrigating the field in which the crop is to be grown, harvesting the crop following growth thereof and applying at least one product to at least one of the field and the crop planted in said field; determining, using the computing device, based on at least one of the crop, the growth stage cycle of the crop, soil texture of the field in which the crop is to be grown, the geographical location of the field and the practice associated with the crop, a calendar-based time window for completing the practice, the time window including a most favorable time window for completing the practice and at least one lesser favorable time window for completing the practice; and outputting, by the computing device, an alert indicative of the time window for completing the practice including a first indicator indicative of the most favorable time window for completing the practice and at least one second indicator different from the first indicator and indicative of the at least one lesser favorable time window for completing the practice.

Embodiment b) is the method of embodiment a) wherein the step of outputting, by the computing device, an alert comprises displaying on the computing device a calendar and an indicator indicative of the time window for completing the practice including a first indicator indicative of the most favorable time window for completing the practice and at least one second indicator different from the first indicator and indicative of the at least one lesser favorable time window for completing the practice.

Embodiment c) is the method of the embodiment b) wherein the first indicator comprises a first color and the at least one second indicator comprises a second color different from said first color.

Embodiment d) is the method of any of the embodiments a) to c) wherein the at least one lesser favorable time window comprises a moderately favorable time window and a least favorable time window for completing the practice, the at least one second indicator comprising an indicator indicative of the moderately favorable time window and a different indicator indicative of the least favorable time window for completing the practice.

Embodiment e) is the method of any of the embodiments a) to d) comprising further receiving, at the computing device, user input relating to one of a planned date on which seeding of the field is to be completed and an actual date on which seeding of the field was completed, the practice comprising applying at least one product to at least one of the field and the crop planted in said field, the step of determining a calendar-based time window comprising determining, using the computing device, based on the crop, the growth stage cycle of the crop, the one of the planned and actual date of seeding and the at least one product to be applied to one of the field and the crop, a calendar-based time window for completing the product application, the time window including a most favorable time window for completing the product application and at least one lesser favorable time window for completing the product application.

Embodiment f) is the method of embodiment e) wherein the further receiving step comprises further receiving, at the computing device, the actual date on which seeding was completed, the user input regarding applying at least one product to at least one of the field and the crop planted in said field being received, using the computing device, at a date after the actual date on which seeding was completed, the step of determining a calendar-based time window comprising determining, using the computing device, based on the crop, the growth stage cycle of the crop, the actual date of seeding, the date on which the computing device receives the user input regarding applying at least one product to at least one of the field and the crop and the at least one product to be applied to at least one of the field and the crop, a calendar-based time window for completing the product application, the time window including a most favorable time window for completing the product application and at least one lesser favorable time window for completing the product application.

Embodiment g) is the method of any of the embodiments a) to f) further comprising receiving, at the computing device, user input regarding a planned date of completing the product application within the calendar-based time window for completing the product application, determining, using the computing device, based on the planned date of completing the product application, a calendar task identifying the planned date of completing the product and a person responsible for completing the task, and outputting, by the computing device, an alert indicative of the task and the person responsible for completing the task.

Embodiment h) is the method of embodiment g) further comprising receiving, at the computing device, user input regarding an amount of the product to be applied to the at least one of the field and the crop planted in said field, determining, using the computing device, based on the user input and product specifications for the product to be applied, a compliance check indicator indicative of whether the planned application of the product is in compliance with the product specifications; and outputting on the computing device an alert in the event that the planned application of the product is not in compliance with the product specifications.

Embodiment i) is the method of any of the embodiments a) to d) further comprising receiving, at the computing device, user input regarding a visually determined growth stage of the crop after planting of the crop and prior to harvesting thereof, determining, using the computing device, based on the crop, the growth stage cycle of the crop, the visually determined growth stage and the practice associated with the crop, a revised calendar-based time window for completing the practice, the time window including a most favorable time window for completing the practice and at least one lesser favorable time window for completing the practice; and outputting, by the computing device, an alert indicative of the revised time window for completing the practice including a first indicator indicative of the most favorable time window for completing the practice and at least one second indicator different from the first indicator and indicative of the at least one lesser favorable time window for completing the practice.

Embodiment j) is an agricultural monitoring device comprising: a memory device; and a processor communicatively coupled to the memory device, the processor configured to: receive input regarding a crop to be grown in a field, a growth stage cycle for said crop, and a practice associated with said crop, the practice comprising at least one of: seeding the field in which the crop is to be grown, tilling the field in which the crop is to be grown, irrigating the field in which the crop is to be grown, harvesting the crop and applying at least one product to at least one of the field and the crop planted in said field; determine, based on at least one of the crop, the growth stage cycle of the crop, soil texture of the field in which the crop is to be grown, the geographical location of the field and the practice associated with the crop, a calendar-based time window for completing the practice, the time window including a most favorable time window for completing the practice and at least one lesser favorable time window for completing the practice; and output to the computing device an alert indicative of the time window for completing the practice including a first indicator indicative of the most favorable time window for completing the practice and at least one second indicator different from the first indicator and indicative of the at least one lesser favorable time window for completing the practice.

Embodiment k) is the device of embodiment j) wherein the alert output to the computing device comprises a visual display on the computing device of a calendar and an indicator indicative of the time window for completing the practice including a first indicator indicative of the most favorable time window for completing the practice and at least one second indicator different from the first indicator and indicative of the at least one lesser favorable time window for completing the practice.

Embodiment I) is the device of embodiment j) or embodiment k) wherein the first indicator comprises a first color and at least one second indicator comprises a different color from said first color.

Embodiment m) is the device of any of the embodiments j) to I) wherein the at least one lesser favorable time window comprises a moderately favorable time window and a least favorable time window for completing the practice, the at least one second indicator comprising one indicator indicative of the moderately favorable time window and a different indicator indicative of the least favorable time window for completing the practice.

Embodiment n) is the device of any of the embodiments j) to m) wherein the processor is further configured to receive user input relating to one of a planned date on which seeding of the field is to be completed and an actual date on which seeding of the field was completed, the practice comprising applying at least one product to at least one of the field and the crop planted in said field, and determine, based on the crop, the growth stage cycle of the crop, the one of the planned and actual date of seeding and the at least one product to be applied to one of the field and the crop, a calendar-based time window for completing the product application, the time window including a most favorable time window for completing the product application and at least one lesser favorable time window for completing the product application.

Embodiment o) is the device of embodiment n) wherein the processor is further configured to receive user input regarding the actual date on which seeding was completed, the user input regarding applying at least one product to at least one of the field and the crop planted in said field being received by the processor at a date after the actual date on which seeding was completed, and determine, based on the crop, the growth stage cycle of the crop, the actual date of seeding, the date on which the computing device receives the user input regarding applying at least one product to at least one of the field and the crop and the at least one product to be applied to at least one of the field and the crop, a calendar-based time window for completing the product application, the time window including a most favorable time window for completing the product application and at least one lesser favorable time window for completing the product application.

Embodiment p) is the device of any of the embodiments j) to o) wherein the processor is further configured to receive user input regarding a planned date of completing the product application within the calendar-based time window for completing the product application, determine, based on the planned date of completing the product application, a calendar task identifying the planned date of completing the product and a person responsible for completing the task, and output to the computing device an alert indicative of the task and the person responsible for completing the task.

Embodiment q) is the device of any of the embodiments j) to p) wherein the processor is further configured to receive user input regarding an amount of the product to be applied to the at least one of the field and the crop planted in said field, determine, based on the user input and product specifications for the product to be applied, a compliance check indicator indicative of whether the planned application of the product is in compliance with the product specifications; and output to the computing device an alert in the event that the planned application of the product is not in compliance with the product specifications.

Embodiment r) is the device of any of the embodiments j) to q) wherein the processor is further configured to receive user input regarding a visually determined growth stage of the crop after planting of the crop and prior to harvesting thereof, determine, based on the crop, the growth stage cycle of the crop, the visually determined growth stage of the crop and the practice associated with the crop, a revised calendar-based time window for completing the practice, the time window including a most favorable time window for completing the practice and at least one lesser favorable time window for completing the practice; and output to the computing device an alert indicative of the revised time window for completing the practice including a first indicator indicative of the most favorable time window for completing the practice and at least one second indicator different from the first indicator and indicative of the at least one lesser favorable time window for completing the practice.

Embodiment s) is a computer implemented method comprising: receiving, at a computing device, at least in part from a user grower, input regarding a field in which a crop is to be grown, a crop to be grown in said field, and a practice associated with said crop, the practice comprising at least one of: seeding the field in which the crop is to be grown, tilling the field in which the crop is to be grown, irrigating the field in which the crop is to be grown, harvesting the crop following growth thereof and applying at least one product to at least one of the field and the crop planted in said field; determining, using the computing device, based at least on the field information, the crop information and the practice associated with the crop, a calendar-based time window for completing the practice, the time window including a most favorable time window for completing the practice and at least one lesser favorable time window for completing the practice; determining, using the computing device, based at least on the field information, the crop information and the practice associated with the crop, a yield forecast for said crop; receiving, at the computing device data regarding at least one of an added practice associated with said crop, a deleted practice associated with said crop, and a change to the practice associated with said crop; determining, using the computing device, based at least on the at least one added practice, deleted practice and change to said practice associated with said crop, an updated calendar-based time window for completing the practice and an updated yield forecast; and outputting, by the computing device, an alert indicative of the impact that the at least one added practice, deleted practice and change to said practice associated with said crop has on both the time window for completing the practice and the yield forecast.

Embodiment t) is an agricultural device comprising: a memory device; and a processor communicatively coupled to the memory device, the processor configured to: receive, at least in part from a user grower, data regarding a field in which a crop is to be grown, a crop to be grown in said field, and a practice associated with said crop, the practice comprising at least one of: seeding the field in which the crop is to be grown, tilling the field in which the crop is to be grown, irrigating the field in which the crop is to be grown, harvesting the crop following growth thereof and applying at least one product to at least one of the field and the crop planted in said field; determine, based at least on the field information, the crop information and the practice associated with the crop, a calendar-based time window for completing the practice, the time window including a most favorable time window for completing the practice and at least one lesser favorable time window for completing the practice; display, based at least on the field information, the crop information and the practice associated with the crop, a yield forecast for said crop; receive user input regarding at least one of an added practice associated with said crop, a deleted practice associated with said crop, and a change to the practice associated with said crop; determine, based at least on the at least one added practice, deleted practice and change to said practice associated with said crop, an updated calendar-based time window for completing the practice, and display an updated yield forecast; and output to the computing device an alert indicative of the impact that the at least one added practice, deleted practice and change to said practice associated with said crop has on both the time window for completing the practice and the yield forecast.

In an embodiment A), an agricultural planning system is provided which includes: a memory device; and at least one processor communicatively coupled to the memory device, the memory device being encoded with instructions that, when executed by the at least one processor, cause the at least one processor to: receive data associated with a plan for growing an agricultural crop, the plan data being indicative of at least one practice associated with growing an agricultural crop, the at least one practice comprising at least one of: seeding a field in which the crop is to be grown, tilling the field in which the crop is to be grown, irrigating the field in which the crop is to be grown, harvesting the crop and applying at least one product to at least one of the field and the crop planted in said field; determine an overall sustainability score for at least one sustainability category associated with sustainable growing practices, said determining comprising determining an overall level for at least one indicator that is indicative of the sustainability category, the indicator level being determined at least in part as a function of the data indicative of the at least one practice associated with growing an agricultural crop, the overall sustainability score for the at least one sustainability category being a function of each determined indicator level; determine a benchmark score for the at least one sustainability category, the benchmark score being associated with accepted sustainable growing practices, the at least processer determining the benchmark score by determining a benchmark level corresponding to the at least one indicator that is indicative of the sustainability category, the benchmark level of the at least one indicator being determined at least in part as a function of the crop, the location of the field in which the crop is planted and the sustainability category, the benchmark score for the at least one sustainability category being a function of each determined indicator benchmark level; determine a comparison value of the determined overall sustainability score for the at least one sustainability category to the benchmark score for said at least one sustainability category; and output an indicator of whether the comparison value is below a predetermined minimum threshold comparison value to indicate whether the plan for growing an agricultural crop meets acceptable sustainable growing practices.

Embodiment B) is the device of embodiment A), wherein to determine an overall sustainability score for the at least one sustainability category the at least one processer determines an overall level for each of a plurality of indicators, each indicator being indicative of a respective sustainability category, each indicator level being determined at least in part as a function of the data indicative of the at least one practice associated with growing an agricultural crop and of the sustainability category to which the indicator is associated, the overall sustainability score for the at least one sustainability category being an aggregate of the indicator levels respectively determined for the indicators associated with the sustainability category to which the indicators are associated, and to determine a benchmark score for the at least one sustainability category the at least processor determines a benchmark level corresponding to each respective indicator associated with the at least one sustainability category, the benchmark score for the at least one sustainability category being an aggregate of the benchmark levels respectively determined for the indicators associated with the sustainability category to which the indicators are associated.

Embodiment C) is the device of embodiment B) wherein to determine an overall sustainability score for the at least one sustainability category, the at least one processor applies a weighting factor to each determined indicator level to determine a relative contribution of each indicator level to the overall sustainability score of the respective sustainability category, and determines the overall sustainability score as the aggregate of the relative contributions of each indicator level, and to determine a benchmark score for the at least one sustainability category the at least one processor applies a weighting factor to each determined benchmark level to determine a relative contribution of each benchmark level to the benchmark score of the respective sustainability category, and determines the benchmark score as an aggregate of the relative contributions of each benchmark level.

Embodiment D) is the device of either of embodiments B) and embodiment C) wherein when the comparison value is below a predetermined minimum threshold comparison value, the at least one processor is configured to output an additional indicator to indicate which indicator level or indicator levels, are responsible for the low overall score for the respective sustainability category.

Embodiment E) is the device of any of the embodiments A) to D) wherein the at least one processor is further configured to: receive data associated with at least one of a change, an addition to and a deletion from the plan for growing an agricultural crop; determine a re-determined overall sustainability score for at least one sustainability category associated with sustainable growing practices; determine a re-determined benchmark score for the at least one sustainability category; determine a comparison value of the re-determined overall sustainability score for the at least one sustainability category to the re-determined benchmark score for said at least one sustainability category; and output an indicator of whether the comparison value is below a predetermined minimum threshold comparison value to indicate whether the modified plan for growing an agricultural crop meets acceptable sustainable growing practices.

Embodiment F) is the device of any of the embodiments A) to E) wherein the at least one sustainability category comprises a plurality of sustainability categories.

Embodiment G) is the device of the embodiment E) wherein data associated with at least one of a change and an addition to the plan for growing an agricultural crop is indicative of at least one of a change to and an addition of at least one practice associated with growing an agricultural crop, the data being predictive data indicative of the at least one of a change and an addition to the plan being received by the computing device prior to seeding the field in which the crop is to be planted.

Embodiment H) is the device of the embodiment E) wherein data associated with at least one of a change and an addition to the plan for growing an agricultural crop is indicative of at least one of a change to and an addition of at least one practice associated with growing an agricultural crop, the data being actual data received by the computing device and indicative of the at least one of a change and an addition to the plan being received by the computing device at a growth stage of the crop following seeding of the field in which the crop is planted.

Embodiment I) is the device of any of the embodiments A) to H) wherein the at least one sustainability category is selected from the group comprising: Soil Management, Emissions, Bio-Diversity, Economy, Resources and Society.

Embodiment J) is a computer implemented method for sustainable agricultural crop planning, the computer implemented method comprising: receiving, at a computing device, at least in part from a user grower, data associated with a plan for growing an agricultural crop, the data being indicative of at least one practice to be performed by the user for growing the agricultural crop, the at least one practice comprising at least one of: seeding a field in which the crop is to be grown, tilling the field in which the crop is to be grown, irrigating the field in which the crop is to be grown, harvesting the crop and applying at least one product to at least one of the field and the crop planted in said field; determining, using the computing device, a sustainability score at least in part as a function of the data indicative of the at least one practice associated with growing an agricultural crop; determining, using the computing device, a benchmark sustainability score associated with accepted sustainable growing practices, the benchmark sustainability score being determined at least in part as a function of the crop and the geographic location of the field in which the crop is planted; determining, using the computing device, whether the sustainability score is below the benchmark sustainability score; and in the event that the sustainability score is below the benchmark sustainability score, outputting to the user grower, using the computing device, at least one of a) at least one recommendation for improving the sustainability score relative to the benchmark sustainability score and b) an indicator of at least one factor in the sustainability score being below the benchmark sustainability score.

Embodiment K) is the method of embodiment J) wherein the step of determining, using the computing device, a sustainability score comprises determining, using the computing device, a sustainability level for each of a plurality of indicators, each indicator being indicative of at least one practice to be performed by the user for growing the agricultural crop associated such that each indicator level is a factor in the sustainability score, the sustainability score being an aggregate of the determined indicator levels, and in the event that the sustainability score is below the benchmark sustainability score, outputting to the user grower, using the computing device, at least one of a) at least one recommendation for improving the sustainability level of at least one of the plurality of indicators and b) an alert as to which indicator has the greatest impact on the sustainability score being below the benchmark sustainability score.

Embodiment L) is the method of embodiment K) wherein determining, using the computing device, a sustainability level for each of a plurality of indicators comprises applying, using the computing device, a weighting factor to each of the plurality of indicators, the sustainability score being an aggregate of the weighted indicator levels.

Embodiment M) is an agricultural planning system comprising: a memory device; and at least one processor communicatively coupled to the memory device, the memory device being encoded with instructions that, when executed by the at least one processor, cause the at least one processor to: receive at least in part from a user grower, data associated with a plan for growing an agricultural crop, the data being indicative of at least one practice to be performed by the user for growing the agricultural crop, the at least one practice comprising at least one of: seeding a field in which the crop is to be grown, tilling the field in which the crop is to be grown, irrigating the field in which the crop is to be grown, harvesting the crop and applying at least one product to at least one of the field and the crop planted in said field; determine a sustainability score at least in part as a function of the data indicative of the at least one practice associated with growing an agricultural crop; determine a benchmark sustainability score associated with accepted sustainable growing practices, the benchmark sustainability score being determined at least in part as a function of the crop and the geographic location of the field in which the crop is planted; determine whether the sustainability score is below the benchmark sustainability score; and in the event that the sustainability score is below the benchmark sustainability score, output to the user grower at least one of a) at least one recommendation for improving the sustainability score relative to the benchmark sustainability score and b) an indicator of at least one factor in the sustainability score being below the benchmark sustainability score.

Embodiment M) is the system of embodiment L) wherein to determine a sustainability score the at least processor determines a sustainability level for each of a plurality of indicators, each indicator being indicative of at least one practice to be performed by the user for growing the agricultural crop associated such that each indicator level is a factor in the sustainability score, and determines the sustainability score as an aggregate of the determined indicator levels, and in the event that the sustainability score is below the benchmark sustainability score, outputs to the user grower at least one of a) at least one recommendation for improving the sustainability level of at least one of the plurality of indicators and b) an alert as to which indicator has the greatest impact on the sustainability score being below the benchmark sustainability score.

Embodiment N) is the system of embodiment M) wherein to determine a sustainability level for each of the plurality of indicators the at least one processor applies a weighting factor to each of the plurality of indicators, the sustainability score being an aggregate of the weighted indicator levels.

Embodiment O) is a computer implemented agricultural planning method comprising: receiving, at a computing device, data associated with a plan for growing an agricultural crop, the data being indicative of at least one practice associated with growing an agricultural crop, the at least one practice comprising at least one of: seeding a field in which the crop is to be grown, tilling the field in which the crop is to be grown, irrigating the field in which the crop is to be grown, harvesting the crop and applying at least one product to at least one of the field and the crop planted in said field; determining, using the computing device, an overall sustainability score for at least one sustainability category associated with sustainable growing practices, said determining step comprising determining, using the computing device, an overall level for at least one indicator that is indicative of the sustainability category, the indicator level being determined at least in part as a function of the data indicative of the at least one practice associated with growing an agricultural crop, the overall sustainability score for the at least one sustainability category being a function of each determined indicator level; displaying, using the computing device, based at least on the field information, the crop information and the practice associated with the crop, a yield forecast for said crop; receiving, at the computing device user input regarding at least one of an added practice associated with said crop, a deleted practice associated with said crop, and a change to the practice associated with said crop; determining, using the computing device, based at least on the at least one added practice, deleted practice and change to said practice associated with said crop, an updated overall sustainability score; displaying, using the computing device, based at least on the at least one added practice, deleted practice and change to said practice associated with said crop, an updated yield forecast; and outputting, by the computing device, an alert indicative of the impact that the at least one added practice, deleted practice and change to said practice associated with said crop has on both the overall sustainability score and the yield forecast.

Embodiment P) is an agricultural device comprising: a memory device; and a processor communicatively coupled to the memory device, the processor configured to: receive, at least in part from a user grower, data associated with a plan for growing an agricultural crop, the data being indicative of at least one practice associated with growing an agricultural crop, the at least one practice comprising at least one of: seeding a field in which the crop is to be grown, tilling the field in which the crop is to be grown, irrigating the field in which the crop is to be grown, harvesting the crop and applying at least one product to at least one of the field and the crop planted in said field; determine an overall sustainability score for at least one sustainability category associated with sustainable growing practices, said determination comprising determining, using the computing device, an overall level for at least one indicator that is indicative of the sustainability category, the indicator level being determined at least in part as a function of the data indicative of the at least one practice associated with growing an agricultural crop, the overall sustainability score for the at least one sustainability category being a function of each determined indicator level; display, based at least on the field information, the crop information and the practice associated with the crop, a yield forecast for said crop; receive data associated with at least one of an added practice associated with said crop, a deleted practice associated with said crop, and a change to the practice associated with said crop; determine, based at least on the at least one added practice, deleted practice and change to said practice associated with said crop, an updated overall sustainability score; display, based at least on the at least one added practice, deleted practice and change to said practice associated with said crop, an updated yield forecast; and output to the computing device an alert indicative of the impact that the at least one added practice, deleted practice and change to said practice associated with said crop has on both the overall sustainability score and the yield forecast.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A computer implemented agricultural planning method comprising:
receiving, at a computing device, data associated with a plan for growing an agricultural crop, the data being indicative of at least one practice associated with growing an agricultural crop, the at least one practice comprising at least one of:
seeding a field in which the crop is to be grown, tilling the field in which the crop is to be grown, irrigating the field in which the crop is to be grown, harvesting the crop and
applying at least one product to at least one of the field and the crop planted in said field;
determining, using the computing device, an overall sustainability score for at least one sustainability category associated with sustainable growing practices, said determining step comprising determining, using the computing device, an overall level for at least one indicator that is indicative of the sustainability category, the indicator level being determined at least in part as a function of the data indicative of the at least one practice associated with growing an agricultural crop, the overall sustainability score for the at least one sustainability category being a function of each determined indicator level;
determining, using the computing device, a benchmark score for the at least one sustainability category, the benchmark score being associated with accepted sustainable growing practices, the step of determining the benchmark score comprising determining, using the computing device, a benchmark level corresponding to the at least one indicator that is indicative of the sustainability category, the benchmark level of the at least one indicator being determined at least in part as a function of the crop, the location of the field in which the crop is planted and the sustainability category, the benchmark score for the at least one sustainability category being a function of each determined indicator benchmark level;
determining, using the computing device, a comparison value of the determined overall sustainability score for the at least one sustainability category to the benchmark score for said at least one sustainability category; and
outputting an indicator of whether the comparison value is below a predetermined minimum threshold comparison value to indicate whether the plan for growing an agricultural crop meets acceptable sustainable growing practices.

2. The computer implemented method of claim 1, wherein the at least one sustainability category is selected from the group comprising: Soil Management, Emissions, and Bio-Diversity.

3. The computer implemented method of claim 2, wherein the score determined for the category Soil Management is a function of indicators, selected from nitrogen balance, phosphorus balance, potassium balance, sulfur balance, compaction and soil organic matter.

4. The computer implemented method of claim 2, wherein the score determined for the categories Soil Management, Emissions and Bio-Diversity is related to the precision of applying fertilizers to have less excess fertilization.

5. The computer implemented method of claim 2, wherein the score determined to the category Bio-Diversity is related to the use of selective crop protection products having low off-target eco-toxicity.

6. The computer implemented method of claim 2, wherein the sustainability score is indicative of the likelihoods to positively and negatively affect the soil or the environment by emissions, or to affect bio-diversity.

7. The computer implemented method of the preceding claims, wherein the step of determining an overall sustainability score for the at least one sustainability category comprises determining, using the computing device, an overall level for each of a plurality of indicators, each indicator being indicative of a respective sustainability category, each indicator level being determined at least in part as a function of the data indicative of the at least one practice associated with growing an agricultural crop and of the sustainability category to which the indicator is associated, the overall sustainability score for the at least one sustainability category being an aggregate of the indicator levels respectively determined for the indicators associated with the sustainability category to which the indicators are associated,
the step of determining, using the computing device, a benchmark score for the at least one sustainability category comprising determining, using the computing device, a benchmark level corresponding to each respective indicator associated with the at least one sustainability category, the benchmark score for the at least one sustainability category being an aggregate of the benchmark levels respectively determined for the indicators associated with the sustainability category to which the indicators are associated.

8. The computer implemented method of claim 7 wherein the step of determining an overall sustainability score for the at least one sustainability category comprises applying a weighting factor to each determined indicator level to determine a relative contribution of each indicator level to the overall sustainability score of the respective sustainability category, the overall sustainability score being the aggregate of the relative contributions of each indicator level, the step of determining a benchmark score for the at least one sustainability category comprising applying a weighting factor to each determined benchmark level to determine a relative contribution of each benchmark level to the benchmark score of the respective sustainability category, the benchmark score being an aggregate of the relative contributions of each benchmark level.

9. The computer implemented method of either of claims 7 and 8 further comprising, when the comparison value is below a predetermined minimum threshold comparison value, outputting an additional indicator to indicate which indicator level or indicator levels, are responsible for the low overall score for the respective sustainability category.

10. The computer implemented method of any of claims 1 to 9 further comprising:
receiving, at the computing device, data associated with at least one of a change, an addition to and a deletion to the plan for growing an agricultural crop;
re-determining, using the computing device, a re-determined overall sustainability score for at least one sustainability category associated with sustainable growing practices;
re-determining, using the computing device, a benchmark score for the at least one sustainability category;
determining, using the computing device, a comparison value of the redetermined overall sustainability score for the at least one sustainability category to the redetermined benchmark score for said at least one sustainability category; and
outputting an indicator of whether the comparison value is below a predetermined minimum threshold comparison value to indicate whether the modified plan for growing an agricultural crop meets acceptable sustainable growing practices.

11. The computer implemented method of any of claims 1 to 10 wherein the at least one sustainability category comprises a plurality of sustainability categories.

12. The computer implemented method of claim 10 wherein data associated with at least one of a change and an addition to the plan for growing an agricultural crop is indicative of at least one of a change to and an addition of at least one practice associated with growing an agricultural crop, the data being predictive data indicative of the at least one of a change and an addition to the plan being received by the computing device prior to seeding the field in which the crop is to be planted.

13. The computer implemented method of claim 10 wherein data associated with at least one of a change and an addition to the plan for growing an agricultural crop is indicative of at least one of a change to and an addition of at least one practice associated with growing an agricultural crop, the data being actual data received by the computing device and indicative of the at least one of a change and an addition to the plan being received by the computing device at a growth stage of the crop following seeding of the field in which the crop is planted.

14. The computer implemented method of any of the preceding claims, wherein at least a further sustainability category is selected from the group comprising: Economy, Resources and Society.

15. An agricultural planning system comprising:
a memory device; and
at least one processor communicatively coupled to the memory device, the memory device being encoded with instructions that, when executed by the at least one processor, cause the at least one processor to:
receive data associated with a plan for growing an agricultural crop, the plan data being indicative of at least one practice associated with growing an agricultural crop, the at least one practice comprising at least one of: seeding a field in which the crop is to be grown, tilling the field in which the crop is to be grown, irrigating the field in which the crop is to be grown, harvesting the crop and applying at least one product to at least one of the field and the crop planted in said field;
determine an overall sustainability score for at least one sustainability category associated with sustainable growing practices, said determining comprising determining an overall level for at least one indicator that is indicative of the sustainability category, the indicator level being determined at least in part as a function of the data indicative of the at least one practice associated with growing an agricultural crop, the overall sustainability score for the at least one sustainability category being a function of each determined indicator level;
determine a benchmark score for the at least one sustainability category, the benchmark score being associated with accepted sustainable growing practices, the at least processer determining the benchmark score by determining a benchmark level corresponding to the at least one indicator that is indicative of the sustainability category, the benchmark level of the at least one indicator being determined at least in part as a function of the crop, the location of the field in which the crop is planted and the sustainability category, the benchmark score for the at least one sustainability category being a function of each determined indicator benchmark level;
determine a comparison value of the determined overall sustainability score for the at least one sustainability category to the benchmark score for said at least one sustainability category; and
output an indicator of whether the comparison value is below a predetermined minimum threshold comparison value to indicate whether the plan for growing an agricultural crop meets acceptable sustainable growing practices.
